(19) Europäisches Patentamt / European Patent Office / Office européen des brevets

(11) **EP 2 064 450 B1**

(12) **EUROPÄISCHE PATENTSCHRIFT**

(45) Veröffentlichungstag und Bekanntmachung des Hinweises auf die Patenterteilung:
**03.09.2014 Patentblatt 2014/36**

(51) Int Cl.:
*F04D 25/06* *(2006.01)*   *F04D 29/058* *(2006.01)*

(21) Anmeldenummer: **07818098.1**

(22) Anmeldetag: **11.09.2007**

(86) Internationale Anmeldenummer:
**PCT/EP2007/007895**

(87) Internationale Veröffentlichungsnummer:
**WO 2008/034542 (27.03.2008 Gazette 2008/13)**

(54) **LÜFTER**

FAN

VENTILATEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.09.2006 DE 102006046434**

(43) Veröffentlichungstag der Anmeldung:
**03.06.2009 Patentblatt 2009/23**

(73) Patentinhaber: **ebm-papst St. Georgen GmbH & Co. KG**
**78112 St. Georgen (DE)**

(72) Erfinder:
• **JUNGMAYR, Gerald**
**A-4050 Traun (AT)**
• **AMRHEIN, Wolfgang**
**A-4100 Ottensheim (AT)**

(74) Vertreter: **Raible, Tobias**
**Raible & Raible**
**Patentanwälte**
**Bolzstrasse 3**
**70173 Stuttgart (DE)**

(56) Entgegenhaltungen:
**EP-A- 1 578 005      DE-A1- 10 007 428**
**DE-C1- 10 216 447      DE-U1- 20 304 493**
**US-A1- 2005 140 228**

**Beschreibung**

Die Erfindung betrifft einen Lüfter mit einem elektronisch kommutierten Antriebsmotor zum Antrieb von Lüfterflügeln. Ein solcher Antriebsmotor hat einen Stator und einen mit einer Welle versehenen Rotor, und seine Welle ist am Stator gelagert.

Lüfter werden heute meistens durch elektronisch kommutierte Motoren angetrieben. Bei diesen ist, vor allem aus Gründen der Lebensdauer, aber auch wegen der Lagergeräusche, eine Lagerung des Lüfterrades ohne mechanische Lager erwünscht. Dies gilt besonders bei schnell laufenden Lüftern, wie sie z.B. zur Belüftung von Servern verwendet werden.

Für eine Lagerung ohne mechanische Lager sind Anordnungen mit Permanentmagneten bekannt. Siehe dazu z.B DE 203 04 493 U. Man bezeichnet das auch als "berührungslose Lagerung", oder als "magnetisch gelagerte Antriebe." Dabei gibt es zwei Arten von so genannten passiven Lagern, also von Lagern, die ohne Energiezufuhr von außen arbeiten:

- Magnetische Lager, die axial stabil, aber radial instabil sind.
- Magnetische Lager, die radial stabil, aber axial instabil sind.

Es ist eine Aufgabe der Erfindung, einen neuen Lüfter bereit zu stellen.

Nach der Erfindung wird diese Aufgabe gelöst durch den Gegenstand des Patentanspruchs 1. Dies ermöglicht eine gedrungene und mechanisch robuste Bauweise, da ein Lüfter ohnedies ein Lüfterrad braucht, das durch den Rotor des elektronisch kommutierten Motors angetrieben wird. Bei der Erfindung wird der Raum innerhalb des Lüfterrads zur Schaffung eines zylindrischen Luftspalts verwendet. In diesem wird ein etwa radial verlaufendes Magnetfeld erzeugt, in dem sich eine Tauchspule befindet, die mit dem Stator des Motors mechanisch verbunden ist. Abhängig vom Strom in dieser Tauchspule kann die axiale Lage des Lüfterrades und damit des Rotors relativ zum Stator aktiv geregelt werden, wodurch man ein aktiv geregeltes magnetisches Axiallager von einfachem Aufbau erhält. Das minimiert Reibung und Geräusche während des Betriebs und erhöht die Lebensdauer. Hierbei ist es möglich, den Strom durch die Tauchspule niedrig zu halten und dadurch eine Beeinträchtigung des Lüfter-Wirkungsgrades zu reduzieren.

Auf diese Weise gelingt es, bei Lüftern mit beliebiger Einbaulage (waagerecht, senkrecht etc.) einen reibungs-und berührungsfreien Lauf des Rotors zu gewährleisten. Dadurch, dass das Lüfterrad frei schwebt, wird die Lebensdauer des Lüfters erhöht und seine Geräuschentwicklung reduziert. Eine solche Anordnung kann auch das Eigengewicht des Rotors und andere, in axialer Richtung wirkende Kräfte aufnehmen, z. B. Strömungskräfte, elektromagnetische Kräfte, Vibrationskräfte, Schockkräfte. Dies wird auch aus der nachfolgenden Beschreibung deutlich. Durch den Wegfall der Lagerreibung kann sich zudem der Wirkungsgrad verbessern.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:

Fig. 1    einen Längsschnitt durch den Rotor eines Lüfters, bei dem auf der Rotorwelle 34 ringförmige Permanentmagnete angeordnet sind, welche Komponenten von passiven magnetischen Radiallagern 16 und 18 sind,

Fig. 2    einen Längsschnitt durch den zu Fig. 1 gehörenden Stator einschließlich einer an diesem angeordneten Tauchspule 64, welche einen Bestandteil eines aktiv regelbaren magnetischen Axiallagers bildet,

Fig. 3    eine Darstellung des Lüfters nach den Fig. 1 und 2 im zusammengebauten Zustand; der Lüfter ist in einem Zustand dargestellt, in welchem das aktive Axiallager aktiviert ist, d.h. dass der Rotor "schwebt",

Fig. 4    den Verlauf des magnetischen Flusses bei dem Rotor der Fig. 1, wie er bei dem aktiven magnetischen Axiallager verwendet wird,

Fig. 5    eine Explosionsdarstellung des Lüfters der Fig. 3,

Fig. 6    eine Darstellung analog Fig. 4, welche in einer stark schematisierten Darstellung die Wirkungsweise eines Lüfters nach einem bevorzugten Ausführungsbeispiel der Erfindung zeigt,

Fig. 7    eine Darstellung des prinzipiellen Aufbaus eines Wirbelstromsensors 33, wie er bei einer Ausführungsform der Erfindung verwendet werden kann,

Fig. 8    eine schematische Darstellung der Auswertung der elektrischen Signale des Wirbelstromsensors 33,

Fig. 9     eine Darstellung des Ausgangssignals des Wirbelstromsensors 33 abhängig von einer Abstandsgröße d,

Fig. 10     eine Schaltung, welche zeigt, wie der Strom i in einer Tauchspule 64 in Abhängigkeit vom Ausgangssignal des Wirbelstromsensors 33 und anderen Größen gesteuert wird,

Fig. 11     eine Darstellung, welche vier Grundbauarten von berührungslosen magnetischen Radiallagern zeigt,

Fig. 12     eine Einzeldarstellung der Lagerbauart 262 der Fig. 11,

Fig. 13     eine Darstellung des Feldlinienverlaufs bei der Lagerbauart 262 der Fig. 11 und 12,

Fig. 14     eine Einzeldarstellung der Lagerbauart 254 der Fig. 11,

Fig. 15     eine Darstellung des Feldlinienverlaufs bei der Lagerbauart 254 der Fig. 11 und 14,

Fig. 16     eine Variante zur Lagerbauart 254 der Fig. 14; bei dieser Variante ist die Gefahr reduziert, dass sich die Magnetringe des Radiallagers gegenseitig entmagnetisieren,

Fig. 17     eine Darstellung der Lagerbauart 214 nach Fig. 12 und Fig. 13 in drei verschiedenen Axialstellungen,

Fig. 18     eine Darstellung, welche für die Lagerbauart 254 nach Fig. 17 für verschiedene Axialstellungen des Lagers, die unten in Fig. 18 eingezeichnet sind, die erzeugte Axialkraft $F_z$ und die Lagersteifigkeit $S_r$ zeigt,

Fig. 19     eine vergrößerte Darstellung der Einzelheit XIX der Fig. 18,

Fig. 20     die Darstellung einer bevorzugten Regelanordnung 198, wie sie beim Lüfter nach den Fig. 1 bis 6 verwendet werden kann, um diesen berührungslos und mit geringem Energieaufwand zu lagern,

Fig. 21     eine Darstellung analog Fig. 3, aber im stromlosen Zustand des Lüfters, in dem die Rotorwelle 34 mit magnetisch erzeugter Vorspannung gegen eine Scheibe 72 anliegt,

Fig. 22     eine Auschnittsvergrößerung aus Fig. 21, welche die Lage des unteren Radiallagers 18 im stromlosen Zustand des Lüfters zeigt,

Fig. 23     die Darstellung einer Startroutine, wie sie nach dem Einschalten eines Lüfters abläuft, um die berührungslosen Lager in eine Betriebsstellung zu bringen,

Fig. 24     die Darstellung einer ersten Variante, welche im Betrieb dazu dient, die axiale Lage der Lüfterwelle zu verändern,

Fig. 25     eine zweite Variante, und

Fig. 26     eine dritte Variante einer Anordnung zur Veränderung der axialen Lage der Rotorwelle.

In der nachfolgenden Beschreibung werden gleiche oder gleich wirkende Teile mit denselben Bezugszeichen bezeichnet und gewöhnlich nur einmal beschrieben. Räumliche Begriffe wie oben, unten, links, rechts beziehen sich auf die jeweilige Figur.

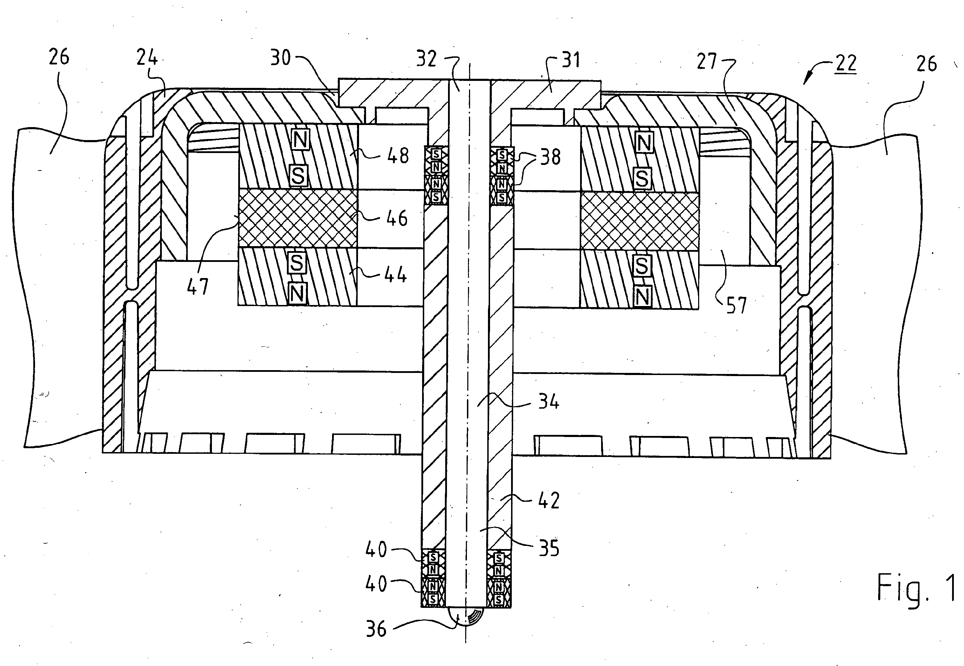

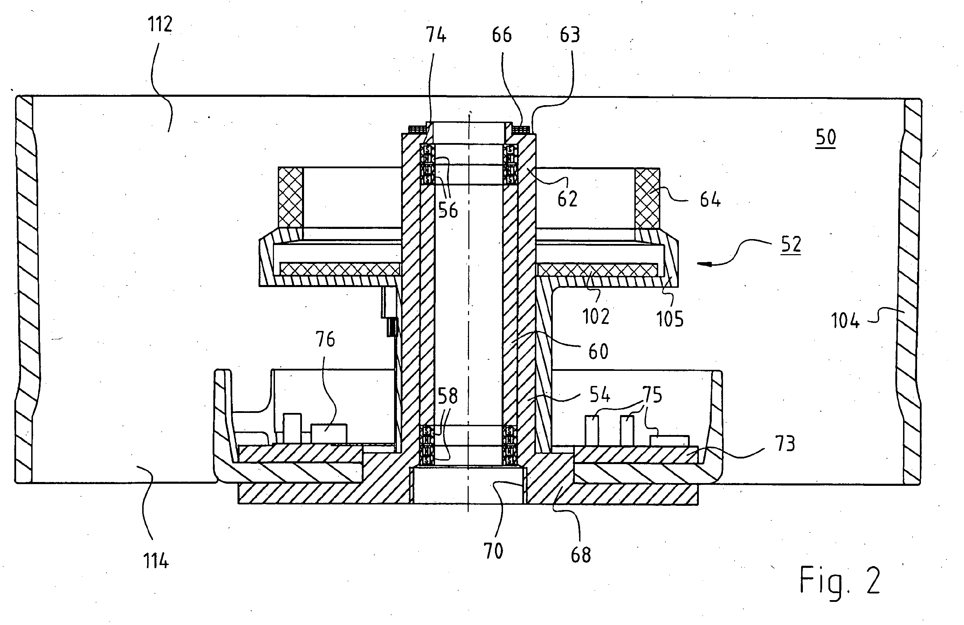

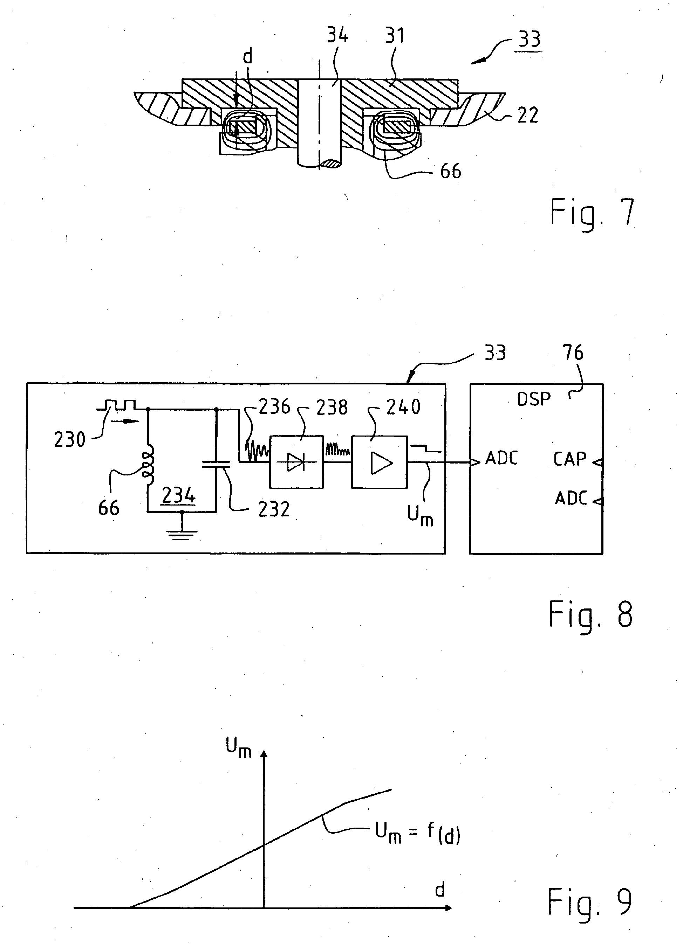

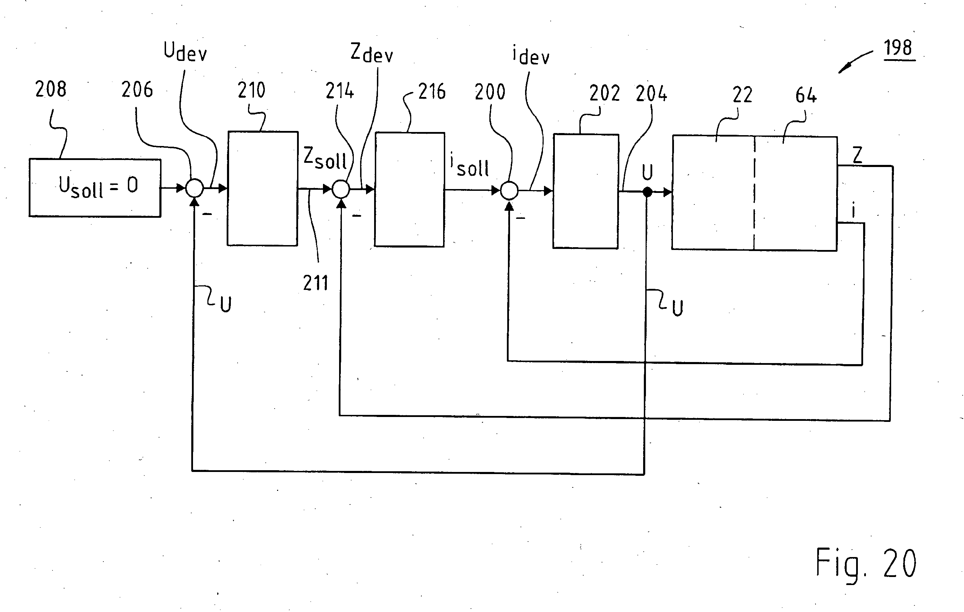

**Fig. 1** zeigt den Rotor 22 eines Lüfters 100. Der Rotor 22 hat eine Rotorglocke 24 mit einem Boden 30, in welchem ein oberes Wellenende 32 einer Rotorwelle 34 in einer Aluminiumnabe 31 befestigt ist. Das untere Ende der Rotorwelle 34 ist mit 35 bezeichnet. Die Aluminiumnabe 31 gehört zu einem Wirbelstromsensor 33 (Fig. 7, Fig. 8), zu dem auch eine Sensorspule 66 (Fig. 2) gehört. Sie wird mit einem hochfrequenten Strom 230 gespeist und erzeugt folglich ein hochfrequentes Magnetfeld, z.B. mit einer Frequenz von 1 MHz. Bei Änderung des Abstands d (Fig. 7) zwischen der Spule 66 und der Aluminiumnabe 31 ändert sich die Dämpfung der Spule 66, und das kann als elektrisches Signal Um (Fig. 9) erfasst werden. Dieses Signal stellt ein Maß für den Abstand d zwischen der Sensorspule 66 und der Nabe 31 dar. Es kann mit einem Referenzwert $Z_{soll}$ (Fig. 20, Vergleicher 214) verglichen werden. Durch einen Lageregler 216 wird dieses Positionssignal, dort Z genannt, auf einen optimierten Sollwert $Z_{soll}$ geregelt, um den Rotor 22 in einer optimalen axialen Lage relativ zum Stator 50 zu halten. Das wird nachfolgend beschrieben.

Das untere Ende 35 der Welle 34 ist etwa kuppenförmig ausgebildet und dient im Notfall, oder nach dem Abschalten des Lüfters 100, im Zusammenwirken mit einem Teil 72 als mechanisches Axiallager bzw. als so genanntes Fanglager.

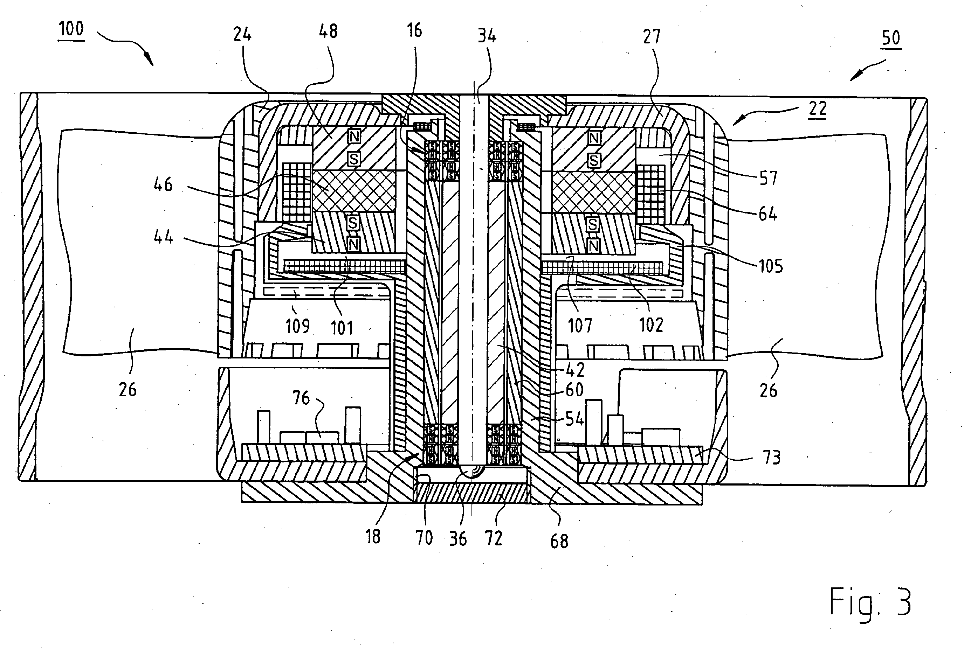

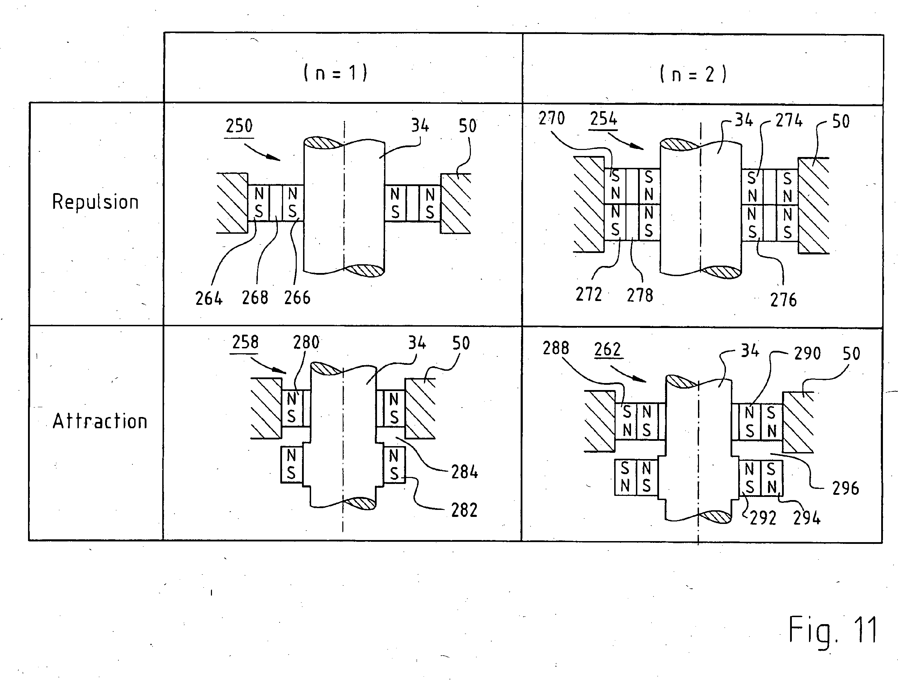

Zur passiven radialen Lagerung der Welle 34 sind zwei passive magnetische Radiallager 16 (Fig. 3, oben) und 18 (Fig. 3, unten) vorgesehen, die beim Ausführungsbeispiel identisch aufgebaut sind. Das obere Radiallager 18 hat zwei Magnetringe 38 am oberen Ende 32 der Welle 34, und diesen etwa gegenüber liegend zwei stationäre Magnetringe 56 in einem Lagerrohr 54, vgl. Fig. 2. Das untere Radiallager 18 hat zwei Magnetringe 40 am unteren Ende 35 der Welle 34, und diesen etwa gegenüber liegend zwei stationäre Magnetringe 58 in einem Lagerrohr 54, vgl. Fig. 2. Alle diese Ringe sind in axialer Richtung magnetisiert und bestehen aus permanentmagnetischem Material, z.B. aus SmCo oder aus NdFeB. Die Magnetringe 38 und 40 werden durch eine Distanzhülse 42 in einem definierten Abstand voneinander gehalten. Ebenso werden die Magnetringe 56 und 58 durch eine Distanzhülse 60 (Fig. 2) in diesem definierten Abstand voneinander gehalten. Bei dieser Art von repulsiven Radiallagern 16, 18, wie sie nachfolgend bei Fig. 11, Fig. 14, Fig. 17, Fig. 18 und Fig. 19 in allen Details beschrieben wird und dort mit 254 bezeichnet ist, sollten die Distanzhülsen 42 und 60 exakt die gleiche Länge haben und bevorzugt elektrisch leitend sein, z.B. aus Aluminium.

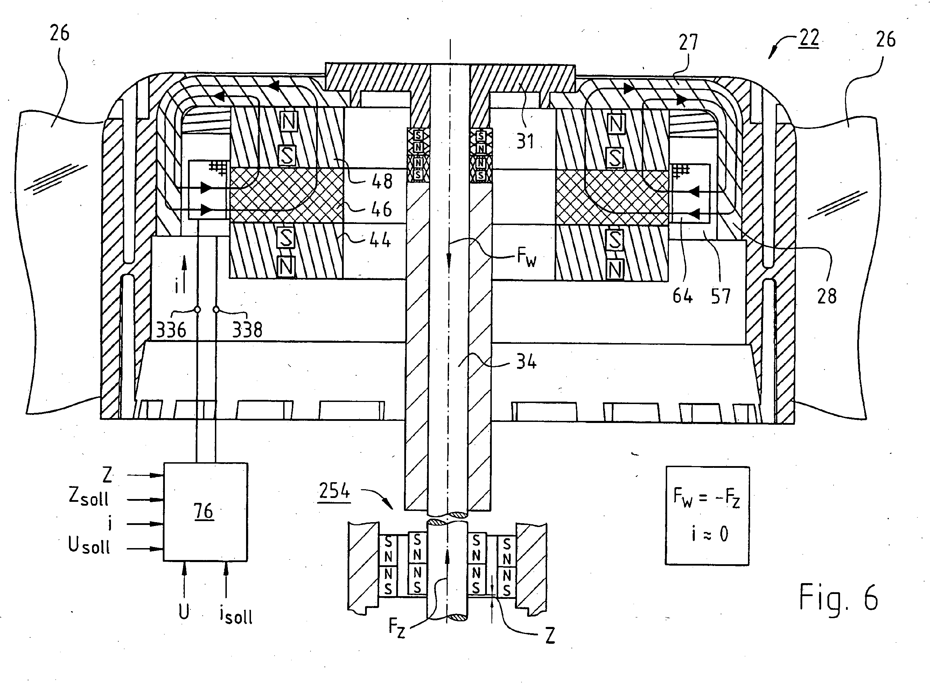

Fig. 2 zeigt einen Längsschnitt durch ein Lüftergehäuse 51, sowie durch den Stator 50 eines Scheibenläufermotors 52, der zum Antrieb des Lüfters 100 dient. (Anstelle eines Scheibenläufermotors 52 kann z.B. auch ein Innen- oder ein Außenläufermotor verwendet werden.) Das Gehäuse 51 ist bevorzugt einstückig mit dem Lagerrohr 54 ausgebildet, in dessen Innerem sich bei diesem Ausführungsbeispiel die beiden oberen Magnetringe 56 und die beiden unteren Magnetringe 58 befinden. Die Distanzglieder 42, 60 bestehen aus demselben Material und haben eine identische Länge. Sie sind so gewählt, dass ein größtmöglicher Abstand zwischen den oberen Magnetringen 38, 56 einerseits und den unteren Magnetringen 40, 58 andererseits gewährleistet ist. Dadurch erreicht man, dass die Kippsteifigkeit der radialen Lageranordnung erhöht wird, welche von diesen Magnetringen gebildet wird, wie das an sich bekannt ist. Auch stellen die Distanzglieder 42, 60 sicher, dass dann, wenn sich das obere Radiallager 16 in seiner axialkraftfreien Mittelstellung befindet, dasselbe auch für das untere Radiallager 18 gilt. (Zum Thema der Axialkräfte vgl. die Ausführungen bei Fig. 6.)

Der oberste Magnetring 56 liegt mit seinem oberen Ende 62 gegen einen Absatz 74 (Fig. 2) des Lagerrohrs 54 an. Zur Abstützung des unteren Endes des untersten Magnetrings 58 dient eine Anlagescheibe 72 (Fig. 3), die in einer Ausnehmung 70 des Lagerrohrs 54 befestigt ist. Die Magnetringe können z.B. durch Kleben befestigt sein.

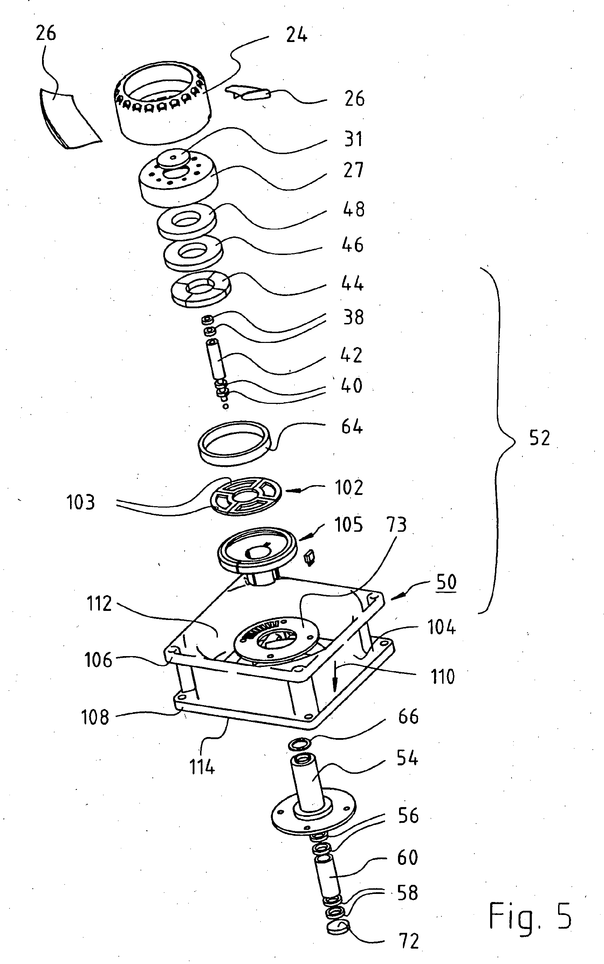

Der Scheibenläufermotor 52 ist bei diesem Ausführungsbeispiel auf der Außenseite des Lagerrohrs 54 befestigt. Er hat einen ebenen (flachen) Luftspalt 101, der nach oben hin durch die Unterseite 107 eines Rotormagneten 44 begrenzt wird. Gemäß Fig. 5 kann der Rotormagnet 44 vierpolig sein. Der Motor 52 hat einen so genannten eisenlosen Stator 102, der beim Ausführungsbeispiel vier sektorförmige eisenlose Spulen 103 (Fig. 5) hat, die in einem Trägerteil 105 aus Kunststoff angeordnet sind. Unterhalb des Trägerteils 105 kann ein magnetischer Rückschluss 109 aus einem weichferromagnetischen Material vorgesehen werden, der in Fig. 3 gestrichelt eingezeichnet ist. Optimal ist, wenn dieser Rückschluss 109 zusammen mit dem Rotormagneten 44 rotiert. Ein Weicheisenring 46 dient als magnetischer Rückschluss für den Rotormagneten 44, und dient außerdem als Flussleitglied für ein aktiv regelbares berührungsloses Axiallager.

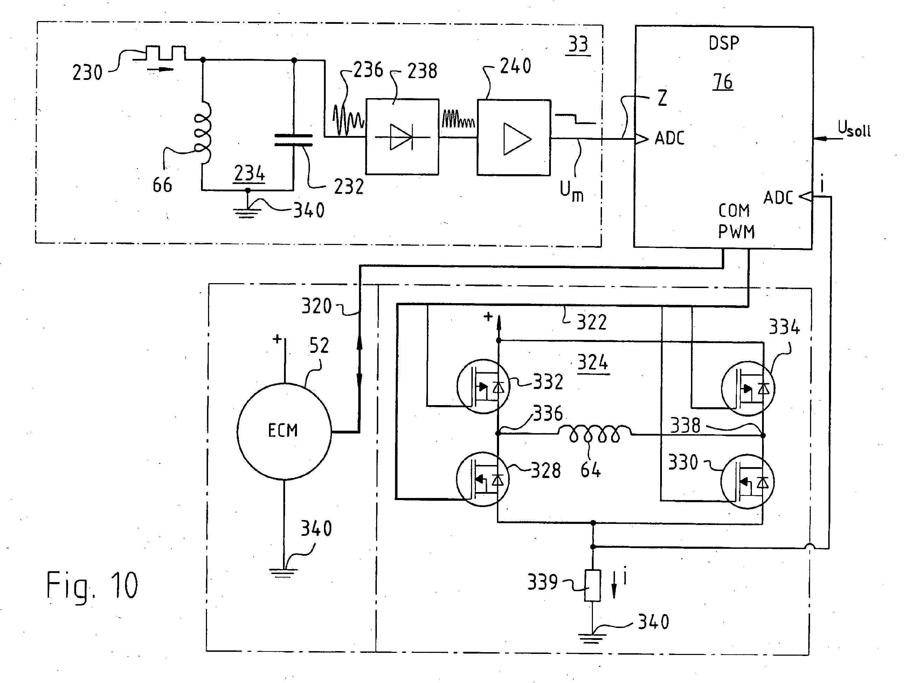

Zum Lüfter 100 gehört eine Leiterplatte 73, auf der elektronische Bauteile 75 angeordnet sind, u.a. ein digitaler Signalprozessor (DSP) 76, welcher sowohl die axiale Lage des Rotors 22 relativ zum Stator 50 regelt, wie auch die Kommutierung der Ströme im elektronisch kommutierten Motor 52 steuert, vgl. Fig. 10. An der Oberseite des Trägerteils 105 ist eine Tauchspule 64 befestigt, welche in einen zylindrischen Luftspalt 57 (Fig. 3) eintaucht und dazu dient, die Lage des Rotors 22 relativ zum Lagerrohr 54 in einer optimierten Position zu stabilisieren. Dies ist keine feste Position, sondern eine Position $Z_{soll}$, die sich nach den Kräften richtet, die im Betrieb auf die Welle 34 in axialer Richtung wirken. Dies wird nachfolgend bei Fig. 20 erläutert.

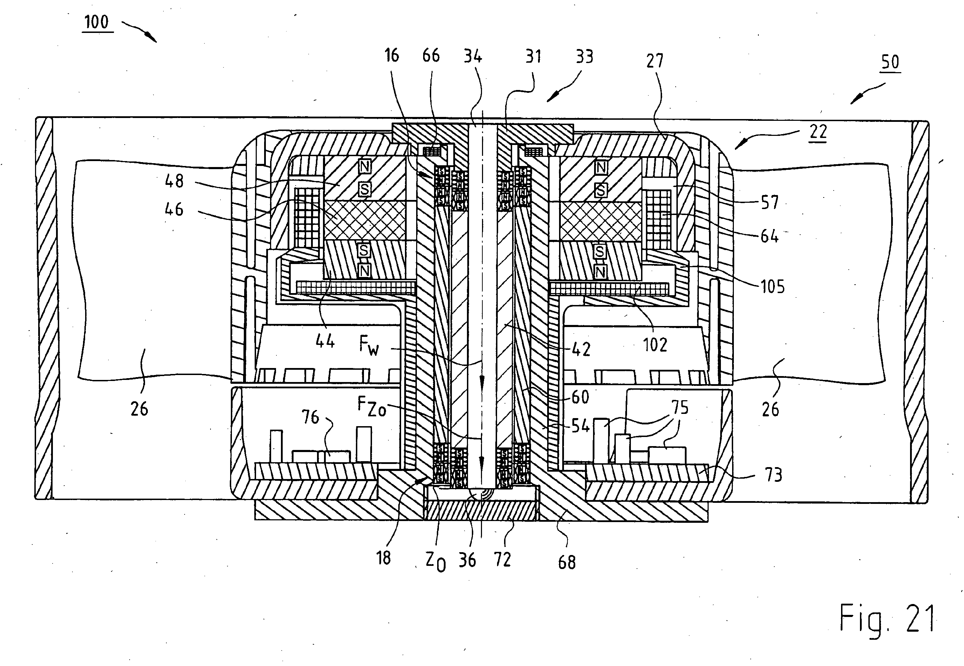

Die Sensorspule 66 des Wirbelstromsensors 33 ist stirnseitig auf einem Absatz 63 (Fig. 2) am oberen Ende 62 des Lagerrohrs 54 angeordnet. Am unteren Endbereich 68 hat das Lagerrohr 54 eine Ausnehmung 70, in der die Anlagescheibe 72 (Fig. 3) befestigt ist, z.B. durch Einschrauben. Beim normalen Lauf des Lüfters 100 schwebt die Welle 34 frei, d.h. ohne die Anlagescheibe 72 zu berühren. Im Stillstand, und bei großen axialen Störkräften, dient die Anlagescheibe 72 als so genanntes Fanglager, d.h. die Welle 34 liegt dann mit ihrer Kuppe 36 gegen die Scheibe 72 an, vgl. Fig. 21, wodurch sich auch Notlaufeigenschaften ergeben. In der gleichen Weise kann ein solches Fanglager auch am oberen Ende des Lagerrohres 54 vorgesehen werden. Ebenso kann mindestens ein radiales Fanglager vorgesehen werden, bei dem der mechanische Spalt des Radial-Gleitlagers kleiner ist als der Spalt des benachbarten magnetischen Radiallagers 16 bzw. 18. Dadurch wird erreicht, dass bei einem eventuellen Abkippen des Rotors 22 das radiale Fanglager als erstes mechanisch beansprucht wird. Die radialen Magnetlager 16, 18 bleiben deshalb in einem solchen Fall unversehrt.

Die Spurkuppe 36 der Welle 34 ist bevorzugt als glattes, abgerundetes Ende ausgebildet; welches zusammen mit der Anlagescheibe 72 ein Axiallager bildet, das auch als Spurlager bezeichnet wird. Das radiale Fanglager ist nicht dargestellt.

Vorteilhaft wird zwischen der Spurkuppe 36 und der Anlagescheibe 72 eine dünne (bevorzugt 0,2 bis 0,3 mm) Schicht aus einem Kunststoff mit niedrigem Reibungskoeffizienten eingefügt, z.B. aus PTFE, so dass die Spurkuppe 36 beim Anlauf, Auslauf, und in Notfällen, mit dieser dünnen Schicht ein Notlauflager bildet.

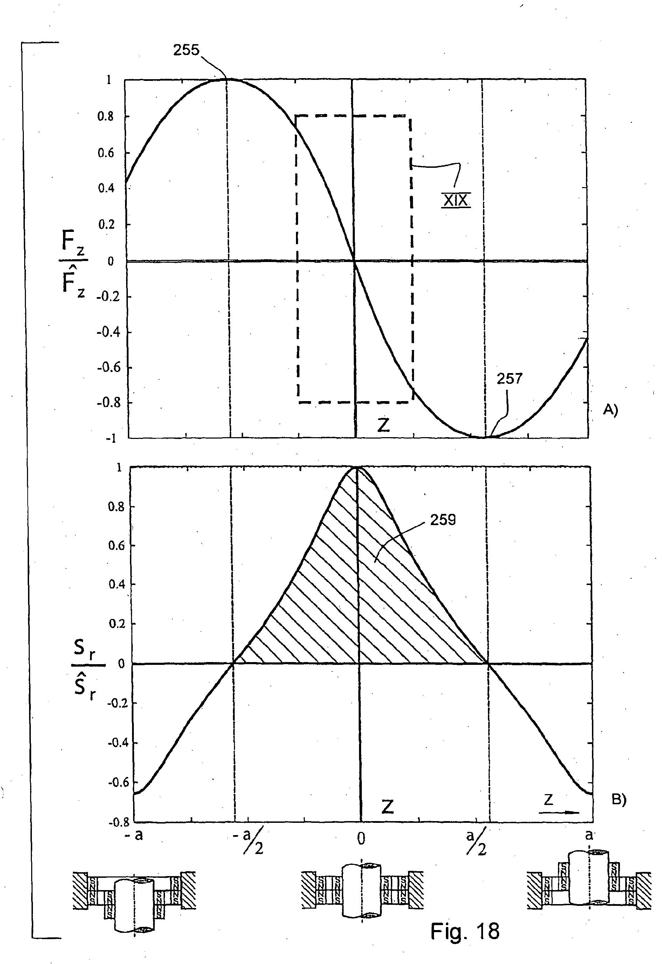

**Fig. 3** zeigt einen Längsschnitt durch den Gesamtaufbau eines Lüfters 100, der von dem Scheibenläufermotor 52 angetrieben wird. In Fig. 3 hat der Rotor 22 im Betrieb keinen Berührungspunkt mit dem Stator 50. Vielmehr wird der Rotor 22 berührungslos in radialer Richtung durch die passiven Radiallager 16, 18 gelagert. Axial wird er berührungslos durch das aktiv regelbare Axiallager 57, 64 und die von den beiden Radiallagern 16, 18 erzeugte axiale Kraft $F_z$ (Fig. 6; Fig. 18) gelagert. Die Komponenten des aktiven Axiallagers sind ein axial magnetisierter Magnetring 48, ein weichferromagnetischer Ring 46, ein zweiter magnetischer Rückschluss 27 am Rotor 22, der zylindrische Luftspalt 57, sowie die eisen lose Tauchspule 64 am Trägerteil 105, also am Stator 50.

Am Außenumfang des Rotors 22, dessen Rotorglocke 24 teilweise aus Kunststoff ausgebildet ist und in welche der magnetische Rückschluss 27 eingebettet ist, befinden sich Lüfterflügel 26, die im Betrieb, und je nach Drehrichtung, eine axiale Kraft auf den Rotor 22 nach oben oder unten, bezogen auf Fig. 1, ausüben. Diese Flügel 26 dämpfen die Bewegungen des Rotors 22, was sich für die erforderlichen Regelvorgänge als sehr vorteilhaft erweist und eine große Stabilität dieser Vorgänge bewi rkt.

Der Rotor 22 mit seiner Rotorwelle 34 und den auf dieser befestigten Magnetringen 38, 40 wird so im Gehäuse 51 positioniert, dass sich die Magnetringe 56, 58 und die Magnetringe 38, 40 bei laufendem Motor 52 etwa gegenüber stehen, aber bei den meisten Betriebsbedingungen ganz geringfügig zueinander versetzt sind. Relativ selten können aber auch Betriebszustände vorkommen, bei denen ein solcher Versatz nicht auftritt.

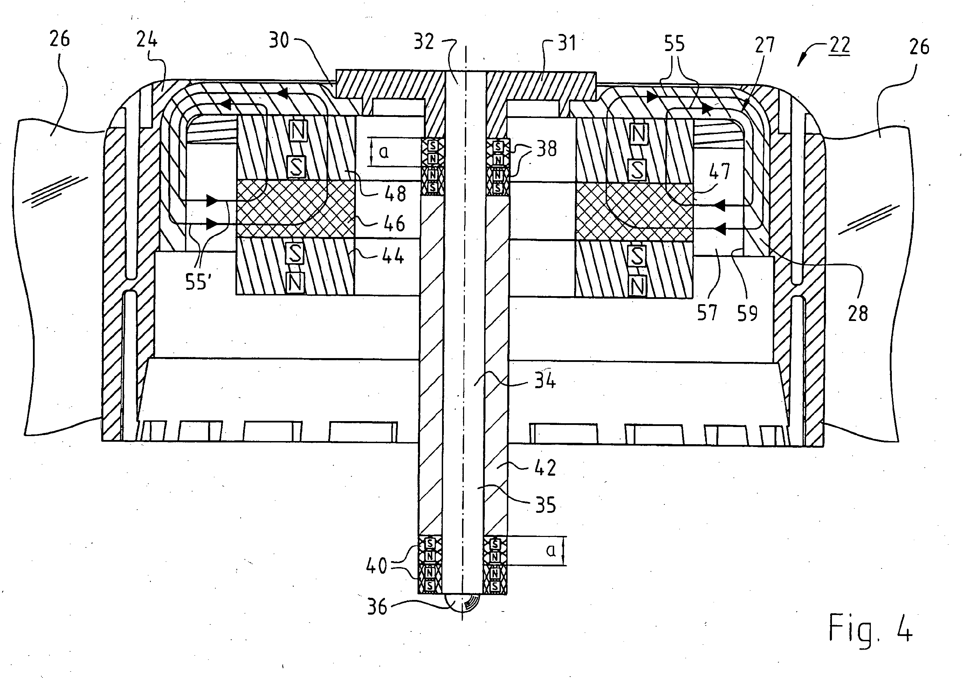

**Fig. 4** zeigt in einer vereinfachten Darstellung den Verlauf der magnetischen Flusslinien 55, welche den Fluss symbolisieren, der vom axial magnetisierten Magnetring 48 erzeugt wird. Dieser Fluss geht in etwa radialer Richtung durch den zylindrischen Luftspalt 57, der sich zwischen der Innenseite 59 des Rückschlusses 27 und der Außenseite 47 des Weicheisenrings 46 erstreckt. Der Fluss 55' im Luftspalt 57 verläuft in radialer Richtung und ist durch die Art der Ausgestaltung des magnetischen Kreises weitgehend homogen. Die Tauchspule 64 befindet sich, wie in Fig. 3 dargestellt, im Bereich dieses homogenen Luftspaltflusses 55'. Wird die Tauchspule 64 bestromt, so erzeugt sie eine axiale Kraft auf den Rotor 22. Die Richtung dieser Kraft ist von der Richtung des Stromes i in der Tauchspule 64 abhängig. Dies ermöglicht es, den Rotor 22 in einer gewünschten axialen Lage zu halten, so dass er im Betrieb kein mechanisches Axiallager benötigt.

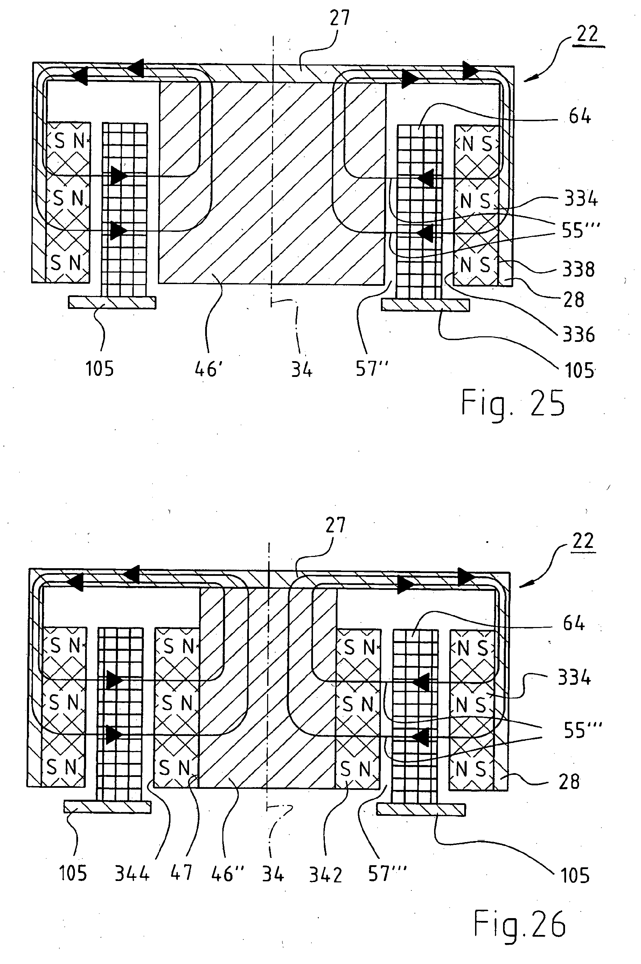

Die Lage des Magnetrings 48 zur Erzeugung des Flusses 55 kann auch anders gewählt werden, z.B. auf der Innenseite 59 des Randabschnitts 28 des zweiten Rückschlussteils 27, vgl. die Anordnungen nach den Fig. 25 und 26. Freilich ist der Magnetring 48 besonders einfach zu fertigen und zu montieren.

**Fig. 5** zeigt den Aufbau des Lüfters 100 in einer Explosionsdarstellung. Der Lüfter 100 hat ein Lüftergehäuse 51, welches etwa die Form eines Rohres 104 hat, an dessen beiden Enden Befestigungsflansche 106, 108 in der üblichen Weise vorgesehen sind. Die Durchströmrichtung der Luft ist bei 110 dargestellt. Die Einströmseite des Lüfters 100 ist mit 112, seine Ausströmseite mit 114 bezeichnet. Der Motor 52 treibt ein Lüfterrad 25 an. Auf ihm befinden sich Lüfterflügel 26 an, von denen nur zwei schematisch dargestellt sind.

Die Form der Flügel 26 ist an die konische Form der Innenseite des Rohres 104 angepasst. Auf seiner Außenseite ist das Lüfterrad 25 bevorzugt kegelstumpfförmig ausgebildet und bildet zusammen mit dem Rohr 104 des Lüftergehäuses 51 eine Luftdurchtrittsöffnung. Diese hat bevorzugt auf der Lufteintrittsseite 112 einen kleineren Durchmesser als auf der Luftaustrittsseite 114. Ebenso hat das Lüfterrad 25 auf der Lufteintrittsseite 112 einen kleineren Durchmesser, der in Richtung zur Luftaustrittsseite 114 zunimmt. Naturgemäß eignet sich der beschriebene Aufbau des Lüfters 100 genauso für einen üblichen Axiallüfter, einen Diagonallüfter oder einen Radiallüfter, da die Art der Lagerung für alle Lüftertypen, und auch für andere Geräte mit ähnlichen Eigenschaften, geeignet ist, besonders deshalb, weil die Lüfterflügel 26 eine natürliche Dämpfung für den Rotor 22 darstellen.

**Fig. 6** zeigt das Arbeitsprinzip der optimierten axialen Lagerung in einer stark vereinfachten und schematisierten Darstellung. Dem DSP 76 werden verschiedene Werte zugeführt, nämlich die Istposition Z, die mit Hilfe des Wirbelstromsensors 33 gemessen wird, der in Fig. 6 nicht dargestellt ist, ferner die Sollposition $Z_{soll}$ (diese wird im DSP 76 intern berechnet, ist aber wegen der Anschaulichkeit als externes Signal dargestellt), ferner der tatsächliche Strom i in der Tauchspule 64, der mittels eines in Fig. 10 dargestellten Stromsensors 339 indirekt gemessen wird und positiv oder negativ sein kann, ferner die vom Geber 208 (Fig. 20) vorgegebene Sollspannung $U_{soll}$=0, die Istspannung U (diese wird ebenfalls intern im DSP 76 berechnet, ist aber als externer Wert dargestellt), und der Sollstrom $i_{soll}$ für den unter-lagerten Stromregler 202 (Fig. 20), welcher Strom $i_{soll}$ ebenfalls intern im DSP 76 berechnet wird.

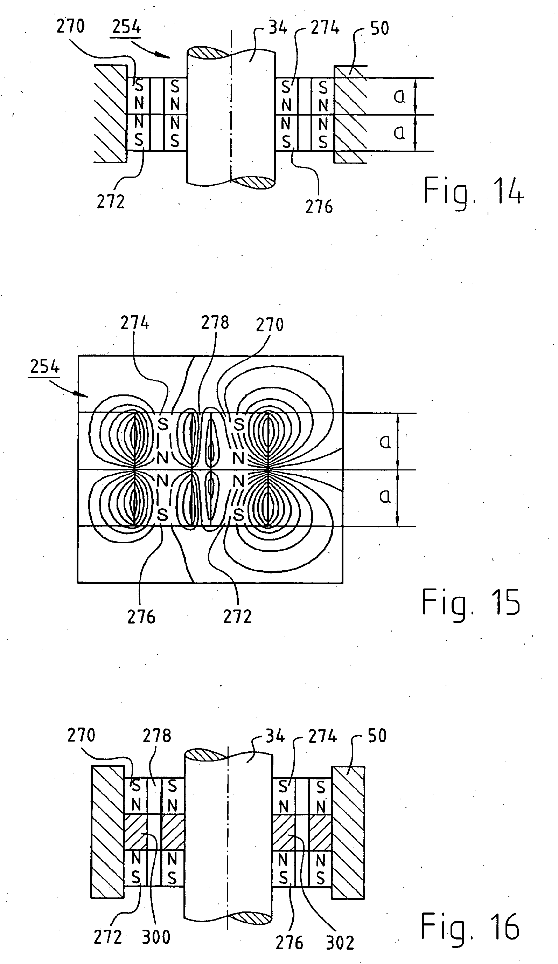

Es wirken hier hauptsächlich zwei Kräfte, zum einen eine Kraft $F_w$, die - bei vertikaler Rotorachse 34 - durch das Eigengewicht des Rotors 22 verursacht wird und nach unten wirkt, und eine Lagerkraft $F_z$, erzeugt durch die beiden Radiallager 16, 18, die nach oben wirkt und deren Größe von der axialen Verschiebung Z zwischen den inneren Magnetringen (Fig. 14: 274, 276) und den äußeren Magnetringen (Fig. 14: 270, 272) abhängt.

In Fig. 6 ist statt der tatsächlich vorhandenen zwei Radiallager 16, 18 nur ein einziges Radiallager 254 dargestellt, dessen Kraft $F_z$ doppelt so groß ist wie die axiale Kraft eines der Radiallager 16, 18. Dies geschieht, um die Darstellung verständlicher zu machen.

Gesteuert durch den DSP 76 wird der Tauchspule 64 so lange ein Strom zugeführt, bis sich der Rotor 22 in einer Lage befindet, in der gilt

$$F_w - F_z = 0 \qquad\qquad \ldots (1)$$

Diese Lage Z muss durch den DSP 76 ständig nachgeregelt werden, da sie instabil ist, aber für das Nachregeln sind nur kleine Werte des Stromes i erforderlich, so dass die aktive axiale Lageregelung (durch die eisenlose Tauchspule 64) nur einen geringen Energiebedarf hat und den Wirkungsgrad des Lüfters 100 nicht wesentlich beeinflusst.

Wenn man die Fig. 6 auf den Kopf stellt, wirkt die Gewichtskraft $F_w$ des Rotors 22 in der entgegengesetzten Richtung, und folglich muss auch die Richtung der Lagerkraft $F_z$ umgekehrt werden, was dadurch geschieht, dass das Vorzeichen des Wertes $Z_{soll}$ umgekehrt wird. Die Lagerkraft $F_z$ wirkt dann in der entgegengesetzten Richtung.

Die in Fig. 20 dargestellte Regelanordnung 198 kompensiert naturgemäß nicht nur die Gewichtskraft $F_w$, also das Eigengewicht des Rotors 22, sondern alle axialen Kräfte, die auf den Rotor 22 wirken, z.B. die Strömungskräfte, die von den Lüfterflügeln 26 erzeugt werden, etwaige Kräfte infolge von Erschütterungen, die auf den Lüfter 100 wirken, und eventuelle axiale Kräfte, die vom Motor 52 erzeugt werden. Günstig ist es, wenn vom Motor 52 keine oszillierenden Kräfte erzeugt werden, da diese ein ständiges Nachregeln der Lage des Rotors 22 erfordern würden. In der Praxis hat es sich gezeigt, dass bei guter Auslegung des Reglers 198 die Größe Z bis auf etwa 1 $\mu$m konstant gehalten werden kann, so dass sich ein sehr ruhiger Lauf des Lüfters 100 ergibt. Dazu trägt auch die Dämpfung durch die Lüfterflügel 26 bei.

**Fig. 7** zeigt schematisch den Aufbau des Wirbelstromsensors 33. In diesem befindet sich die Spule 66, die gemäß **Fig. 9** von einem nicht dargestellten Oszillator mit einem hochfrequenten Strom 230 gespeist wird. Parallel zur Spule 66 liegt ein Kondensator 232, der so gewählt sein kann, dass er zusammen mit der Spule 66 einen Schwingkreis 234 bildet, der mit der Frequenz des Signals 230 in Resonanz ist oder auf einem Seitenarm seiner Resonanzkurve arbeitet.

Die Spannung 236 an diesem Schwingkreis 234 ist eine Funktion des Abstands d (Fig. 7) zwischen der Spule 66 und der Nabe 31. Der Grund ist, dass die Nabe 31 den Schwingkreis 234 umso stärker dämpft, je kleiner der Abstand d wird. Die Nabe 31 besteht aus Aluminium oder einem anderen gut leitenden Metall, z.B. Kupfer.

Die Spannung 236 wird in einem Gleichrichter 238 gleichgerichtet und dann in einem Verstärker 240 verstärkt, so dass man am Ausgang des Verstärkers 240 eine Messspannung $U_m$ erhält, die in Fig. 9 schematisch als Funktion des Abstands d dargestellt ist. Diese analoge Spannung wird einem Eingang ADC des DSP 76 zugeführt und dort in einen digitalen Wert umgewandelt, der in Fig. 20 mit Z bezeichnet ist und in der digitalen Regelanordnung 198 weiter verarbeitet wird, um den Rotor 22 in einem schwebenden Zustand (Levitation) zu halten.

**Fig. 10** zeigt, wie der Strom i durch die Tauchspule 64 vom DSP 76 gesteuert wird.

Der DSP 76 steuert zum einen die Kommutierung des elektronisch kommutierten Motors (ECM) 52, der wie üblich an ein Gleichstromnetz angeschlossen ist und dessen Kommutierung und ggf. Drehzahlregelung vom DSP 76 gesteuert wird, was durch einen bidirektionalen Bus 320 angedeutet ist, über den auch die Rotorstellungssignale vom ECM 52 zum DSP 76 fließen und dort verarbeitet werden, um die Kommutierung des Motors 52 zu steuern und ggf. dessen Drehzahl zu regeln.

Ferner steuert der DSP 76 über einen Bus 322 die Kommutierung in einer H-Brücke 324, welche z.B. unten zwei npn-MOSFETs 328, 330 und oben zwei pnp-MOSFETs 332, 334 hat. In der Diagonalen dieser H-Brücke 324 liegt zwischen einem Anschlusspunkt 336 (zwischen den Transistoren 328 und 332) und einem Anschlusspunkt 338 (zwischen den Transistoren 330 und 334) die Tauchspule 64. Wenn durch den DSP 76 die beiden Transistoren 330 und 332 leitend gesteuert werden, fließt der Strom i vom Anschluss 336 zum Anschluss 338, und wenn durch den DSP 76 die Transistoren 328 und 334 leitend gesteuert werden, fließt der Strom i vom Punkt 338 zum Punkt 336. Die Höhe des Stromes i wird an einem Messwiderstand 339 gemessen, der zwischen Masse 340 und den unteren Transistoren 328 und 330 liegt, und die Höhe des Stromes i kann gesteuert werden durch eine Änderung des Tastverhättnisses von PWM-Signalen, die über den Bus 322 der H-Brücke 324 zugeführt werden. Die Richtung des gemessenen Stromes i ergibt sich daraus, ob die beiden Transistoren 330, 332 leitend sind, oder aber die Transistoren 328, 334.

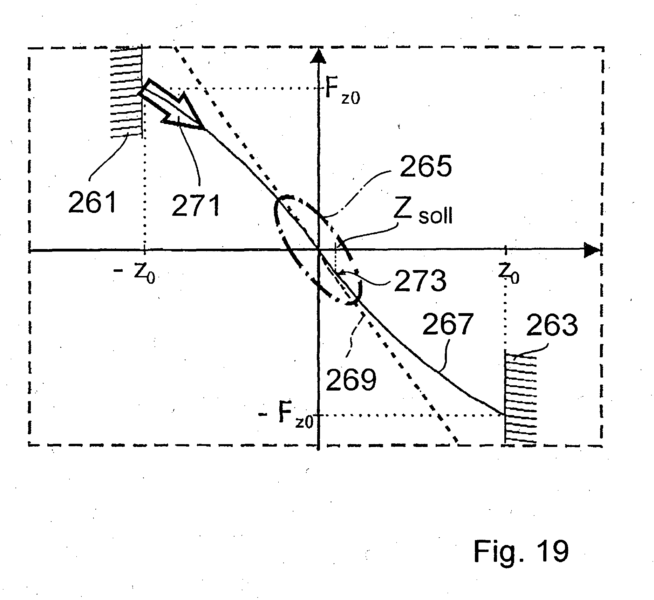

Wenn der Strom i in der Tauchspule 64 vom Anschluss 336 zum Anschluss 338 fließt, verschiebt die durch die Tauchspule 64 erzeugte Lorentzkraft den Rotor 22 nach oben, wie das in Fig. 6 dargestellt ist, d.h. der Wert Z (Fig. 19) wird positiv, und wenn der Strom i vom Anschluss 338 zum Anschluss 336 fließt, verschiebt die Tauchspule 64 den Rotor 22 nach unten, d.h. der Wert Z wird negativ. Solche Verschiebungen sind abhängig davon, in welcher Lage der Lüfter 100 arbeiten muss und bewirken eine entsprechende Veränderung von Größe und ggf. Richtung der Kraft $F_z$.

**Fig. 11** zeigt in einer schematischen Übersicht vier verschiedene Grundtypen von passiven berührungslosen magnetischen Radiallagern, wie sie bei der vorliegenden Erfindung verwendet werden können. Diese sind jeweils zwischen einer Welle 34 und einem Stator 50 angeordnet. Prinzipiell kann die Kraftwirkung der Magnetringe repulsiv (abstoßend) oder attraktiv (anziehend) sein.

Die Magnetringe können gestapelt werden. Hierdurch kann das Verhältnis von radialer Steifigkeit zu Magnetvolumen gesteigert werden. Dabei sind beliebig große Stapelzahlen möglich. Fig. 11 zeigt als Beispiele Stapelzahlen von n=1 und n=2. Auch kann die passive radiale Lagerung im Rahmen der Erfindung durch Permanentmagnete mit radialer Richtung der Magnetisierung realisiert werden.

In der oberen Reihe ist links ein Einfachringlager 250 dargestellt, das auf dem Prinzip der Repulsion (magnetischen Abstoßung gleichnamiger Pole) beruht, und rechts ist ein so genanntes Stapellager 254 mit n=2 Magnetringen dargestellt, das ebenfalls auf dem Prinzip der Repulsion beruht.

In der unteren Reihe ist links ein Einfachringlager 258 dargestellt, das auf dem Prinzip der Attraktion beruht, also auf dem Prinzip der magnetischen Anziehung zwischen Nord- und Südpol, und rechts ist ein Stapellager 262 dargestellt, das ebenfalls auf dem Prinzip der magnetischen Anziehung beruht.

Alle vier Lagertypen können im Rahmen der vorliegenden Erfindung verwendet werden. Das dargestellte Ausführungsbeispiel verwendet beispielhaft Stapellager mit n = 2 Ringen, die nach dem Prinzip der Repulsion arbeiten und in axialer Richtung magnetisiert sind.

Das Lager 250 der Fig. 11 verwendet einen stationären Magnetring 264, der axial magnetisiert ist, und es verwendet einen rotierenden Magnetring 266, der ebenfalls axial magnetisiert ist. Zwischen den Ringen 264, 266 befindet sich ein (magnetischer) Luftspalt 268. Wie man erkennt, liegt jeweils der Nordpol des Rings 264 dem Nordpol des Rings 266 gegenüber, ebenso der Südpol des Rings 264 dem Südpol des Rings 266. Die Abstoßung zwischen den Polen erzeugt die Wirkung als magnetisches Radiallager. Die Instabilität des Lagers 250 in axialer Richtung ist evident, d.h. die Lage der Welle 34 in axialer Richtung muss durch ein entsprechendes Axiallager festgelegt sein.

Das Lager 254 der Fig. 11 verwendet zwei stationäre, axial polarisierte Magnetringe 270, 272, die mit ihren Nordpolen gegeneinander anliegen und die übereinander gestapelt sind. Ebenso verwendet es zwei rotierende, axial polarisierte Magnetringe 274, 276, die übereinander gestapelt sind und mit ihren Nordpolen gegeneinander anliegen. Die Wirkungsweise wird nachfolgend anhand von Fig. 14 und Fig. 15 erklärt und beruht wie beim Lager 250 auf der radialen Abstoßung gleichnamiger Pole. Der Luftspalt ist beim Lager 254 mit 278 bezeichnet.

Das Lager 258 der Fig. 11 hat einen stationären, axial magnetisierten Magnetring 280, der oben einen Nordpol und unten einen Südpol hat. Ebenso hat es einen auf der Welle 34 befestigten und mit dieser rotierenden, axial magnetisierten Magnetring 282, der unten einen Südpol und oben einen Nordpol hat, welcher dem Südpol des Magnetrings 280 gegenüber liegt und von diesem durch einen Luftspalt 284 getrennt ist.

Bewegt sich der Ring 282 in radialer Richtung, so nimmt die Anziehung zwischen den Ringen 280, 282 zu und ist bestrebt, die Welle 34 in eine Lage zu bewegen, die konzentrisch zum Magnetring 280 ist. Die Instabilität in axialer Richtung ist offensichtlich, da sich die Ringe 280, 282 in axialer Richtung gegenseitig anziehen. Diese Instabilität kann jedoch dadurch gemildert werden, dass das andere Radiallager spiegelbildlich zum Radiallager 258 ausgebildet wird.

Das Lager 262 der Fig. 11 hat einen äußeren, stationären, axial magnetisierten Magnetring 288, bei dem der Südpol oben ist, und konzentrisch im Ring 288 hat das Lager 262 einen inneren, stationären, axial magnetisierten Magnetring 290, bei dem der Nordpol oben ist. Die Ringe 288, 290 sind also in radialer Richtung gestapelt.

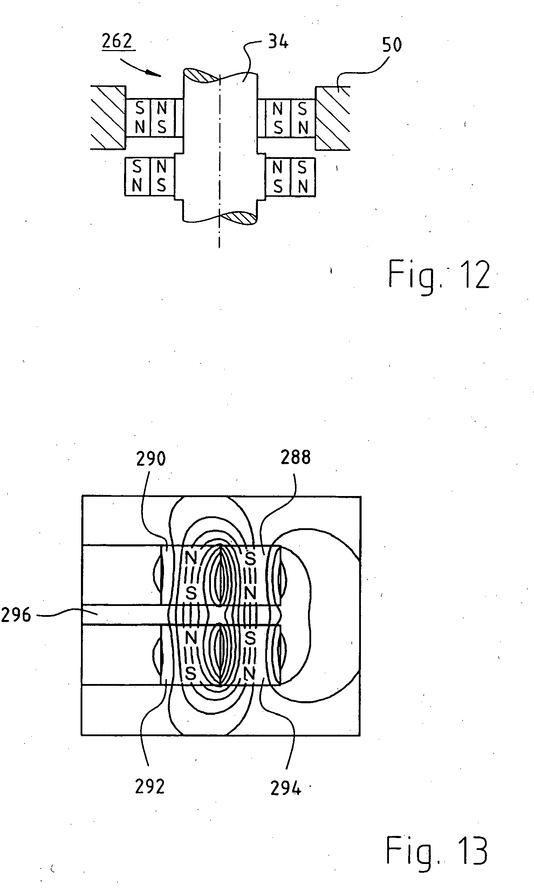

Auf der Welle 34 befindet sich innen ein axial magnetisierter Magnetring 292, bei dem der Nordpol oben ist, und dieser Ring 292 ist umgeben von einem axial magnetisierten Magnetring, 294, bei dem der Südpol oben ist. Ein ebener (flacher) Luftspalt 296 trennt das stationäre Ringpaar 288, 290 vom rotierenden Ringpaar 292, 294. Folglich liegt ein Südpol des stationären Rings 290 einem Nordpol des rotierenden Rings 292 gegenüber, und ein Nordpol des stationären Rings 288 liegt einem Südpol des rotierenden Rings 294 gegenüber. Diese Paarung wirkt einer radialen Verschiebung der Welle 34 entgegen. Weitere Erläuterungen folgen bei Fig. 12 und Fig. 16.

**Fig. 12** stellt nochmals das Lager 262 nach Fig. 11 dar, und **Fig. 13** zeigt den zugehörigen Flusslinienverlauf. Da sich hier überall ungleichnamige Pole gegenüber liegen, ergeben sich sehr kurze Feldlinien. Wenn z.B. der Nordpol des rotierenden Magnetrings 292 in radialer Richtung nach links verschoben wird, kommt er zunehmend in eine Lage gegenüber dem Nordpol des Magnetrings 288 und wird von diesem abgestoßen, und gleichzeitig wird die Anziehung zwischen diesem Nordpol des rotierenden Magnetrings 292 und dem Südpol des stationären Magnetrings 290 verringert, wodurch die Wirkung als berührungsloses radiales Lager erzeugt wird, sofern ein Axiallager vorhanden ist, welches einer axialen Verschiebung zwischen den rotierenden und stationären Ringen entgegen wirkt.

**Fig. 14** zeigt nochmals das Stapellager 254 gemäß Fig. 11, das nach dem Repulsionsprinzip arbeitet. Sein Vorteil ist der symmetrische Aufbau in axialer Richtung. Beide stationären Magnetringe 270, 272 sind identisch, und jeder hat die Höhe a. Ebenso sind die beiden rotierenden Magnetringe 274, 276 identisch, und jeder hat die Höhe a.

**Fig. 15** zeigt den Feldlinienverlauf beim Stapellager 254. Die Bezugszahlen sind dieselben wie in Fig. 11. Hier sind jeweils gleichnamige Pole benachbart, d.h. im Luftspalt 278 tritt eine starke Abstoßung ein, welche die radiale Lagerwirkung erzeugt.

Da sich bei der Konfiguration nach Fig. 15 gleichnamige Pole in axialer Richtung gegenüber liegen, besteht auf die Dauer die Gefahr, dass sich die Magnetringe gegenseitig entmagnetisieren. Aus diesem Grund kann es vorteilhaft sein, gemäß **Fig. 16** zwischen den stationären Magnetringen 270, 272 einen weichferromagnetischen Ring 300 anzuordnen, und ebenso zwischen den rotierenden Magnetringen 274, 276 einen weichferromagnetischen Ring 302. Diese wirken einer solchen Entmagnetisierung entgegen und sind besonders günstig bei Betrieb mit höheren Temperaturen.

Alternativ können die Ringe 300, 302 auch aus nichtmagnetischem Material sein, z.B. aus einem Kunststoff.

Fig. 16 stellt also eine Variante zu Fig. 15 dar und kann bei der Erfindung ebenfalls mit Vorteil verwendet werden.

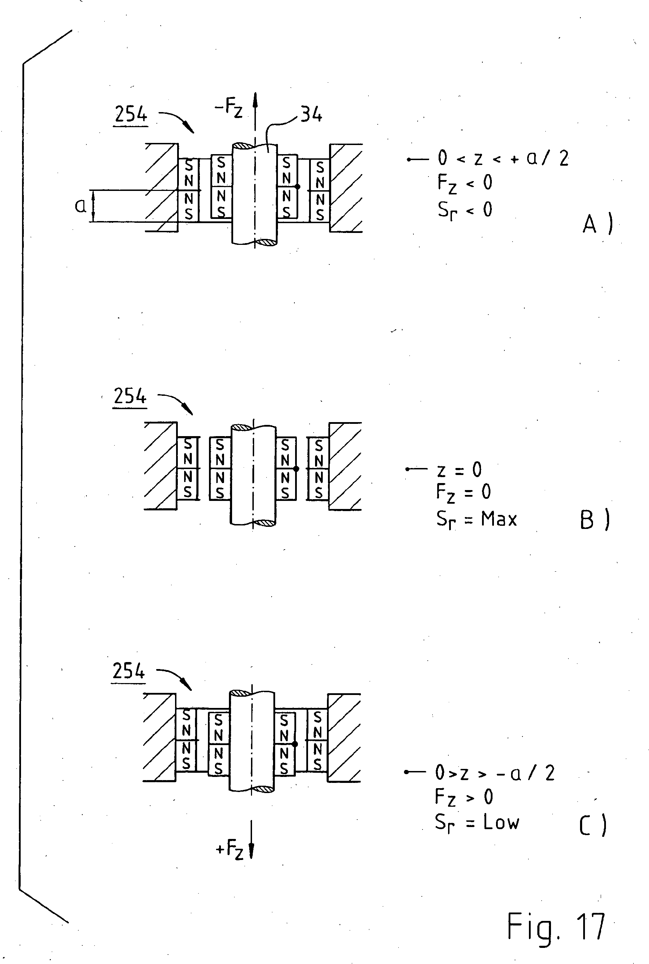

**Fig. 17** zeigt das Radiallager 254, wie es im Ausführungsbeispiel für die Radiallager 16 und 18 verwendet wird, in verschiedenen axialen Stellungen. In der Praxis führt das innere Teil des Radiallagers 254 nur kleine axiale Bewegungen durch, die zudem zur Sicherheit durch Anschläge sowie durch Wertbegrenzungen in dem Programm der Regelanordnung 198 begrenzt sind, d.h. die Werte bestimmter Parameter werden durch das Programm automatisch begrenzt.

Die Darstellung B) von Fig. 17 zeigt das Radiallager 254 in seiner Nullstellung ($Z = 0$). In dieser Stellung erzeugt das Lager 254 keine axiale Kraft, sondern ist im axialen Gleichgewicht, d.h. $F_z = 0$. Die radiale Steifigkeit $S_r$ des Lagers 254 hat ihr Maximum, d.h. der Lüfter 100 sollte so betrieben werden, dass sich seine beiden Radiallager 16, 18 gleichzeitig in der Nähe von $Z = 0$ befinden und sich in axialer Richtung synchron bewegen. Wenn infolge der Lage der Welle 34 das eine Radiallager 16 den Wert $Z = 0$ hat, sollte das andere, identische Radiallager 18 ebenfalls den Wert $Z = 0$ haben. Es sind jedoch auch Fälle denkbar, wo sich eine erste Kraft vom Radiallager 16 einer zweiten Kraft vom Radiallager 18 überlagert und diese beiden Kräfte verschieden groß sind.

Die Darstellung A) von Fig. 17 zeigt einen Zustand, bei dem die Welle 34 relativ zur Darstellung B) um einen Weg nach oben verschoben ist, der kleiner als a/2 ist, also um weniger als die Hälfte der Dicke a eines Magnetrings. Dadurch entsteht eine Kraft $F_z$ nach oben, und die Steifigkeit $S_r$ ist reduziert.

Die Darstellung C) der Fig. 17 zeigt einen Zustand, bei dem die Welle 34 relativ zur Darstellung B) um einen Weg nach unten verschoben ist, der kleiner als a/2 ist. Dadurch entsteht eine Kraft $F_z$ nach unten, und die radiale Steifigkeit $S_r$ ist ebenfalls reduziert.

**Fig. 18** zeigt bei A) beispielhaft den Verlauf der axialen Kraft $F_z$ des Lagers 254 als Funktion der axialen Verschiebung Z.

Bei $Z = 0$ gilt in Fig. 18 $F_z = 0$. Wird Z negativ, so nimmt $F_z$ bis zu einem positiven Maximum 255 zu, das etwa bei -a/2 liegt und nimmt dann wieder ab. Wird Z positiv, so nimmt $F_z$ bis zu einem Minimum 257 ab, das bei +a/2 liegt, und nimmt dann wieder zu.

Die Darstellung B) von Fig. 18 zeigt den Verlauf der radialen Steifigkeit Sr des Lagers 254. Die Steifigkeit Sr hat ihr Maximum bei $Z = 0$ und nimmt von dort in beiden Richtungen ab. Der steife Bereich ist schraffiert und liegt etwa zwischen -a/2 und +a/2. In der Praxis verwendet man diesen Bereich nicht voll, sondern meist nur einen kleinen Teil hiervon, in dem die Steifigkeit Sr besonders hoch ist, wie das für eine gute Lagerung wünschenswert ist. Die mechanischen Anschläge 261, 263 (Fig. 19) werden in diesem radial stabilen Bereich angeordnet.

**Fig. 19** zeigt schematisch eine Vergrößerung des Ausschnitts XIX von Fig. 18. Man erkennt, dass für das Lager 254 ein erster Anschlag 261 an der Stelle $-Z_0$ vorgesehen ist, also in Fig. 14 unterhalb des Lagers 254, und dass ein zweiter Anschlag 263 an der Stelle $+Z_0$ vorgesehen ist, also in Fig. 14 oberhalb des Lagers 254. (Bei einem Lüfter mit stationärer Einbaulage, die sich im Betrieb nicht ändert, könnte der obere stationäre Anschlag 263 entfallen.)

Fig. 19 zeigt auch, dass das Radiallager 254 an der Stelle $-Z_0$ eine axiale Kraft $+F_{z0}$ erzeugt, die gemäß der Darstellung C) von Fig. 17 nach unten wirkt, und dass es an der Stelle $+Z_0$ eine axiale Kraft $F_{z0}$ nach oben erzeugt, entsprechend der Darstellung A) von Fig. 17.

Der Arbeitsbereich, innerhalb dessen der Lüfter 100 im Betrieb arbeitet, ist mit 265 bezeichnet, d.h. dieser Bereich könnte z.B. zwischen etwa -a/4 und etwa +a/4 liegen. Der Arbeitspunkt innerhalb des Bereichs 265 hängt von den verschiedenen Kräften ab, die im Betrieb auf den Rotor 22 wirken. Ein typischer Arbeitspunkt 273 ist eingezeichnet.

In Fig. 19 ist auch eine Kurve 267 dargestellt, welche den Verlauf der Axialkraft $F_z$ als Funktion der Verschiebung Z zeigt, ferner eine Gerade 269, welche im Nullpunkt tangential zur Kurve 267 verläuft und welche im Arbeitsbereich 265 etwa denselben Verlauf hat wie die Kurve 267.

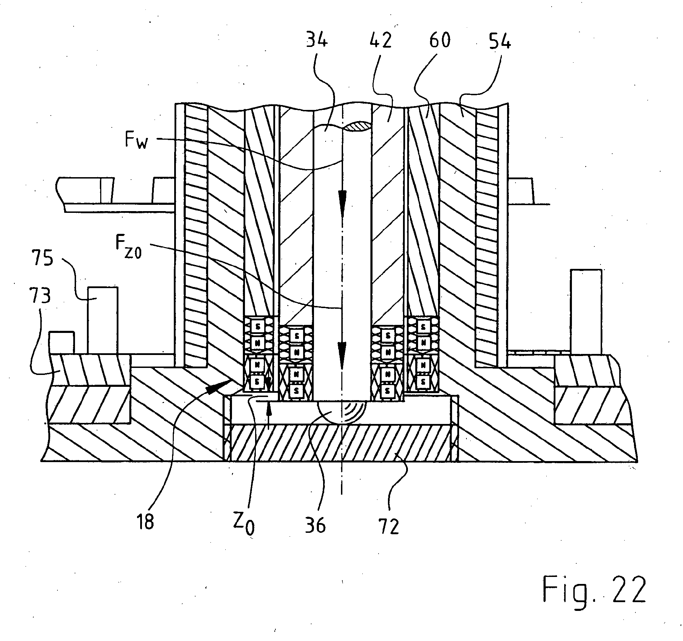

Wenn der Lüfter 100 eine generelle Orientierung entsprechend Fig. 3 hat, befindet sich die Welle 34 beim Start in der Stellung $-Z_0$ (Fig. 19), wobei der Wert von $Z_0$ etwa 0,3 mm betragen kann, und liegt mit einer Kraft $F_{z0}$ gegen den Anschlag 261 an. Diese Stellung der Welle 34 ist in **Fig. 21** und Fig. 22 dargestellt. Man erkennt, dass die Kraft $F_{z0}$ nach unten wirkt, also in der "falschen" Richtung, sofern der Lüfter 100 die Orientierung nach Fig. 21 hat. **Fig. 22** ist eine Ausschnittsvergrößerung aus Fig. 21 und zeigt stark vergrößert das Radiallager 18 im Ruhezustand des Lüfters 100.

Der Start wird in Fig. 19 durch einen Pfeil 271 symbolisiert. Hierbei wird ein entsprechender Startstrom i durch die Tauchspule 64 geschickt, so dass der Rotor 22 nach oben bewegt wird, bezogen auf Fig. 3 oder 21, und dabei die beiden Radiallager 16, 18 in deren Arbeitsbereich 265 (Fig. 19) und bis zum Arbeitspunkt 273 bewegt, so dass der Rotor 22 schwebt.

Diesen Zustand zeigt Fig. 6, wobei aus Gründen der Klarheit der Motor 52 nicht dargestellt ist, da dieser meist nur einen geringen Einfluss auf die berührungslose Lagerung hat. ,

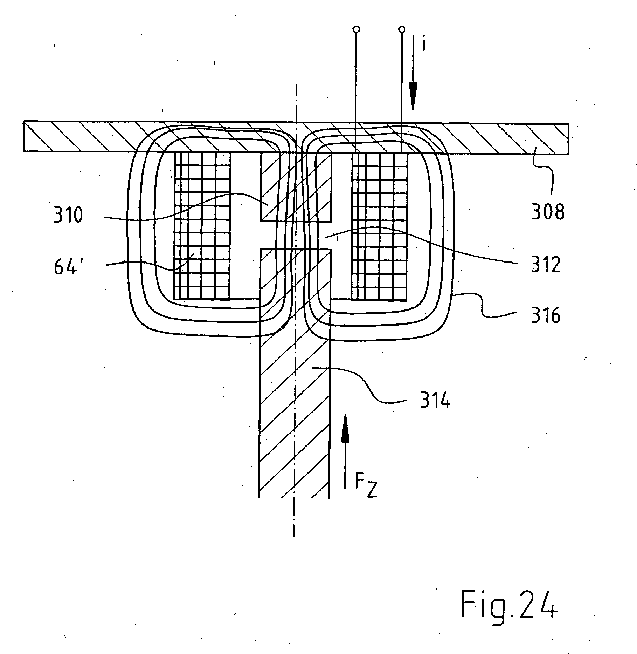

**Fig. 24** zeigt eine Variante der Spulenanordnung für ein aktives magnetisches Axiallager.

Diese Anordnung hat ein Trägerteil 308 aus einem weichferromagnetischen Werkstoff. An diesem ist ein stationärer Polkern 310 befestigt, und dieser ist durch einen Luftspalt 312 getrennt von einem beweglichen Polkern 314, der mit dem (nicht dargestellten) oberen Ende der Welle 34 verbunden ist.

Stationärer Polkern 310 und beweglicher Polkern 314 sind von einer stationären Aktorspule 64' umgeben. Wenn dieser Spule ein Strom i zugeführt wird, erzeugt sie ein Magnetfeld 316 der dargestellten Form, das bestrebt ist, den Luftspalt 312 zu verkleinern, wodurch der bewegliche Polkern 314 mit einer Kraft Fz nach oben gezogen wird.

Nachteilig ist, dass eine solche Anordnung nur eine Kraft nach oben erzeugen kann, was, eine entsprechende unveränderliche Orientierung des Lüfters 100 voraussetzt. Falls eine Kraft in beiden Richtungen erzeugt werden soll, muss eine entsprechende Anordnung auch am unteren Ende der Welle angeordnet werden.

Die Anordnung nach Fig. 24 beruht auf der sog. Maxwellkraft, also auf der Kraftwirkung an Grenzflächen. Dagegen beruht die Kraftwirkung auf eine Tauchspule 64 (wie bei den Fig. 1 bis 23) auf der sog. Lorentzkraft, also auf der Kraft auf einen von Strom durchflossenen Leiter, der sich in einem Magnetfeld befindet. Derzeit werden geregelte Axiallager bevorzugt, die auf der Lorentzkraft beruhen, weil bei diesen die Richtung der erzeugten Kraft durch die Richtung des Stromes i gesteuert werden kann, und weil die Größe der Kraft durch die Größe des Stromes gesteuert werden kann, so dass Axiallager, die mit einer Lorentzkraft arbeiten, vielseitiger in ihrer Anwendung sind. Außerdem hat die Tauchspule 64 eine niedrige Induktivität, da sie keine Teile aus ferromagnetischen Werkstoffen hat. Sie kann deshalb sehr schnell auf Stromänderungen durch den Stromregler 202 (Fig. 20) reagieren, so dass Oszillationen vermieden werden. Die Fig. 25 und 26 zeigen deshalb andere Ausgestaltungen von Axiallagern mit Tauchspule.

**Fig. 25** zeigt eine erste Variante zu dem Rotoraufbau gemäß Fig. 1 bis 5. Die Welle 34, der Wirbelstromsensor 33, die Radiallager 16 und 18, der Motor 52 und die Lüfterflügel 26 sind nicht dargestellt und können gleich aufgebaut sein wie in Fig. 1.

Der becherförmig ausgebildete zweite magnetische Rückschluss 27 trägt auf der Innenseite seines äußeren Randes 28 einen Ring 334 aus permanentmagnetischem Material, der radial magnetisiert ist, d.h. bei Fig. 25 hat er durchgehend auf seiner Innenseite 336 einen Nordpol und auf seiner Außenseite 338 einen Südpol. Naturgemäß könnte alternativ die Innenseite 236 einen Südpol und die Außenseite 338 einen Nordpol haben.

Die Innenseite 336 ist durch einen zylindrischen Luftspalt 57" getrennt von der Außenseite eines magnetischen Rückschlussteils 46'.

In den zylindrischen Luftspalt 57" ragt die eisenlose Tauchspule 64, die ebenso wie bei Fig. 2 an dem statorfesten Trageteil 105 befestigt ist.

Der Vorteil gegenüber Fig. 1 ist, dass die Zone, in der ein homogenes radiales Magnetfeld 55" vorhanden ist, größer sein kann als bei der Ausgestaltung nach Fig. 1 und 4.

**Fig. 26** zeigt eine zweite Variante, bei der ebenso wie bei Fig. 25 die Welle 34, der Lagesensor 33, die Radiallager 16 und 18, der Motor 52 und die Lüfterflügel 26 nicht dargestellt sind. Diese können gleich aufgebaut sein wie bei Fig. 1.

Der glockenförmig aufgebaute zweite magnetische Rückschluss mit dem ersten Ringmagneten 334 ist gleich ausgebildet wie bei Fig. 25, ebenso die Tauchspule 64.

Auf der äußeren Peripherie 47 des ersten magnetischen Rückschlusses 46" ist hier ein zweiter, innerer Magnetring 342 angeordnet, dessen äußere Peripherie 344 dem zylindrischen Luftspalt 57"' zugewandt ist und dessen Fluss den Fluss des ersten Ringmagneten 334 verstärkt, so dass man im Luftspalt 57"' einen sehr homogenen, radialen Magnetfluss 55"' mit einer hohen Magnetflussdichte erhält.

Der zweite Magnetring 342 ist ebenfalls radial magnetisiert und hat bei diesem Beispiel innen einen Nordpol und auf seiner äußeren Peripherie 344 einen Südpol.

Ein homogenes Magnetfeld 55"' erleichtert die Regelung der axialen Lage Z des Rotors 22 und erleichtert auch die Erzeugung der axialen Kraft, die beim Start erforderlich ist, um den Rotor 22 in seine Gleichgewichtslage zu bringen.

Naturgemäß könnte man auch die Rotorausbildung gemäß Fig. 1 kombinieren mit einem äußeren Ringmagneten 334, wie er in Fig. 25 dargestellt ist. Wichtig erscheint, dass der zylindrische Luftspalt 57, 57", 57"' gut mit den motorischen Elementen des Lüfters 100 kombiniert werden kann, ohne das Bauvolumen des Lüfters wesentlich zu erhöhen.

**Fig. 20** zeigt eine bevorzugte Struktur für die verwendete Regelanordnung 198. Bei jedem Regler, der eine so genanntes Schweben bewirken soll, ist eine hohe Regelgeschwindigkeit wichtig, d.h. die axiale Lage Z des Rotors 22 muss bei einem digitalen Regler möglichst häufig erfasst werden, z.B. in Abständen von 100 $\mu$m, und der aktuelle Strom i, der durch die Tauchspule 64 fließt, sollte ebenfalls in geringen Abständen gemessen werden, um ein gutes Reglerergebnis zu erhalten.

An einem Vergleicher 200 wird der gewünschte Strom $i_{soll}$ in der Tauchspule 64 mit dem tatsächlichen Strom i verglichen. Letzterer wird indirekt mit dem Stromsensor 339 der Fig. 10 gemessen. (Das Vorzeichen des Stromes i ergibt sich aus den Kommutierungssignalen der H-Brücke 324.)

Aus der Differenz zwischen i und $i_{soll}$ ergibt sich eine Regelabweichung, genannt $i_{dev}$ (Stromabweichung), und diese wird einem Stromregler 202 zugeführt, der den Strom in der Tauchspule 64 regelt. Der Regler 202 ist ein so genannter "unterlagerter Stromregler", d.h. er arbeitet mit einem Sollwert $i_{soll}$, der von einem Lageregler 216 geliefert wird. An seinem Ausgang erzeugt er eine Spannung U, die erforderlich ist, um einen bestimmten Strom $i_{soll}$ in der Tauchspule 64 zu bewirken. Diese Spannung U wird im Regler 202 berechnet, der gewöhnlich ein Proportionalregler (P-Regler) ist. Die Ausgangsspannung U ist gleich

$$U = k * i_{dev} \qquad\qquad ...(2),$$

also gleich dem Produkt von Stromabweichung $i_{dev}$ und einem konstanten Faktor k.

Die unterlagerte Stromregelung 202 kann entfallen, wenn für die Stabilisierung der axialen Lage Z des Lüfterrades 25 eine Leistungselektronik mit Stromeinprägung verwendet wird, also ein Konstantstromregier.

Die Lageregelung beruht darauf, dass das zeitliche Integral über die Spannung ($\int Udt$) oder alternativ das zeitliche Integral über den Strom ($\int idt$) zu 0 wird, wenn sich das Lüfterrad 25 in einer axialen Position Z befindet, in der sich die Kräfte $F_w$ und $F_z$ (Fig. 6) gegenseitig aufheben. In diesem Fall fließt in der Tauchspule 64 kein Strom, mit Ausnahme von kleinen Korrekturströmen, die notwendig sind, um diese Position $Z_{soll}$ ständig aufrecht zu erhalten.

Am Ausgang 204 des Stromreglers 202 erhält man also die Istspannung U. Diese wird einem Vergleicher 206 zugeführt und dort mit der Sollspannung $U_{soll} = 0$ von einem Sollspannungsgeber 208 verglichen. Diese Sollspannung hat deswegen den Wert 0, weil man damit eine günstige Energiebilanz des Lüfters 100 erzielen kann. Aus der Differenz zwischen der Sollspannung $U_{soll}$ und der Istspannung U ergibt sich eine Spannungsabweichung $U_{dev}$, und diese wird einem Regler 210 zugeführt, der als "überlagerte Positionsnachführung" bezeichnet werden kann.

Der Zweck des Reglers 210 ist es, die "kräftefreie" Position gemäß Fig. 6 zu ermitteln, bei der die nach unten wirkende Kraft $F_w$ (Gewichtskraft des Rotors 22, etc.) exakt ausbalanciert wird durch die nach oben wirkende Gesamtkraft $F_z$ der beiden Radiallager 16, 18.

In diesem ausbalancierten Zustand hat der zeitliche Mittelwert der Spannung U (oder des Stromes i) den Wert 0. Deshalb wird der Regler 210 bevorzugt als Integralregler ausgebildet.

Bei der Initialisierung der Anordnung 198 nach dem Einschalten wird der Wert $Z_{soll}$ am Ausgang 211 auf Null gesetzt. Anschließend wird in jedem Abtastschritt des digitalen Reglers die aktuelle Spannung U am Ausgang 204 mit einem Faktor k multipliziert und zum Wert $Z_{soll}$ des vorhergehenden Abtastschrittes addiert, sofern der Betrag von $Z_{soll}$ dann eine Schranke $Z_{soll,max}$ nicht überschreitet.

Beim Einschalten gilt also

$$Z_{soll0} = 0 \qquad\qquad ...(3)$$

Nach dem ersten Abtastschritt gilt

$$Z_{soll1} = Z_{soll0} + k * U_1 \qquad\qquad ...(4)$$

Nach dem zweiten Abtastschritt gilt

$$Z_{soll2} = Z_{soll1} + k * U_2 \qquad\qquad ...(5)$$

Nach dem n-ten Abtastschritt gilt

$$Z_{solln} = Z_{soll(n-1)} + k * U_n \qquad\qquad ...(6)$$

Auf diese Weise wird die digitale Integration ständig fortgesetzt. Dabei sind $U_1$, $U_2$, $U_3$, $U_n$ etc. die Spannungswerte am Ausgang 204 während des betreffenden Abtastschrittes 1, 2, 3, n...

Diese Integration durch den Regler 210 wird laufend fortgesetzt, und man erhält dadurch im Betrieb bei Nenndrehzahl einen sehr stabilen Wert für $Z_{soll}$, d.h. zwischen Stator 50 und Rotor 22 finden dann nur noch extrem kleine axiale Bewegungen statt.

Der Wert $Z_{soll}$ wird einem Vergleicher 214 zugeführt und dort mit dem Wert Z für die Istposition verglichen, welcher Wert mit dem Wirbelstromsensor 33 (oder einem beliebigen sonstigen Lagesensor) gemessen wird. Der Unterschied zwischen Z und $Z_{soll}$ wird als $Z_{dev}$ bezeichnet und einem Lageregler 216 (PD-Regler) zugeführt, an dessen Ausgang man den Wert $i_{soll}$ für den Sollstrom erhält, der dem bereits beschriebenen Vergleicher 200 zugeführt wird.

Der Wert $i_{soll}$ wird bei der Initialisierung des Lüfters 100 auf Null gesetzt. (Im Betrieb kann der Wert $i_{soll}$ positiv oder negativ sein.)

In jedem Abtastschritt des digitalen Reglers 198 wird im PD-Regler 216 der aktuelle Sollstrom $i_{soll1}$ als gewichtete Summe vom Sollstrom $i_{soll0}$ des vorhergehenden Abtastschrittes, des aktuellen Positionsfehlers $Z_{dev1}$ und des Positionsfehlers $Z_{dev0}$ des vorhergehenden Abtastschrittes berechnet, also

$$i_{soll1} = k1 * i_{soll0} + k2 * Z_{dev1} + k3 * Z_{dev0} \qquad ... (7)$$

Hierbei sind k1, k2 und k3 Konstanten, die zur Gewichtung (weighting) der Werte $i_{soll0}$, $Z_{dev0}$ und $Z_{dev1}$ dienen und die beim Entwurf eines neuen Lüfters mittels entsprechender Regelkreissimulatoren ermittelt werden müssen.

Die Funktion der Positionsnachführung (Regler 210) ist folgende:

Die passiven radialen Lager 16, 18 bilden zwar in radialer Richtung eine stabile, berührungslose Lagerung, sind aber in axialer Richtung instabil, d.h. sie ziehen den Rotor 22 je nach ihrer axialen Lage in der einen oder der anderen axialen Richtung, vgl. Bild A) in Fig. 18, wo die Axialkraft $F_z$ als Funktion von Z dargestellt ist.

Ebenso wirken andere Kräfte in axialer Richtung, z.B. die Gewichtskraft des Rotors 22, Luftkräfte, etc. Die Kraft, die durch die Tauchspule 64 erzeugt wird, wirkt ebenfalls in axialer Richtung.

Für dieses Kräftesystem wird durch den zur Positionsnachführung dienenden Regler 210 ein optimaler Wert $Z_{soll}$ für die Lage des Rotors 22 berechnet, bei dem dieses Kräftesystem mit einem minimalen Energieaufwand im Gleichgewicht gehalten werden kann. Dies wird erreicht durch den Wert $U_{soll} = 0$ vom Sollwertgeber 208. Fig. 19 zeigt beispielhaft einen denkbaren Arbeitspunkt 273, der durch eine solchen Wert $Z_{soll}$ definiert ist.

Dieses "Austarieren" der auf den Rotor 22 wirkenden Kräfte erfolgt durch ganz kleine Veränderungen des Wertes $Z_{soll}$, also der relativen Lage von Stator 50 und Rotor 22, d.h. wenn sich der Rotor 22 in der Lage nach Fig. 6 befindet, ist seine Position etwas nach oben verlagert, z.B. um 0,05 mm, und wenn der Lüfter 100 auf den Kopf gestellt wird, wird die Sollposition des Rotors 22 in der umgekehrten Richtung um einen ähnlichen Weg verschoben. Man kann es auch so ausdrücken, dass die von den Radiallagern 16, 18 in axialer Richtung erzeugten magnetischen Kräfte dazu ausgenutzt werden, um den Rotor 22 mit minimalem Energieaufwand in einer Strom sparenden Position $Z_{soll}$ zu halten, in der sich die Kräfte, die auf den Rotor 22 wirken, im Gleichgewicht befinden und der Rotor 22 folglich "schwebt", ohne dass hierzu ein nennenswerter Strom durch die Tauchspule 64 fließen muss. Das ist vergleichbar mit einem Wellenreiter (Surfer), der von der Welle im Gleichgewicht gehalten und getragen wird, sofern er die notwendigen minimalen Steuerbewegungen richtig ausführt.

Diese axiale Position $Z_{soll}$ des Rotors 22 ist ihrer Natur nach instabil und muss daher ständig nachgeregelt werden, doch genügen zu diesem Zweck sehr kleine Korrekturströme in der Tauchspule 64, wobei das Integral dieser Korrekturströme über der Zeit etwa den Wert 0 hat, wenn der Wert $Z_{soll}$ sein Optimum hat.

**Fig. 21** und **Fig. 22** zeigen eine Darstellung des Lüfters 100 analog Fig. 3. Während aber Fig. 3 den Lüfter in seinem Betriebszustand zeigt, bei dem die Welle 34 schwebt, zeigen Fig. 21 und Fig. 22 den Lüfter 100 im stromlosen Zustand, bei dem das untere Ende der Welle 34 gegen die Scheibe 72 abgestützt ist. Man erkennt, dass die inneren Ringe der beiden Radiallager 16, 18 um etwa a/4 (Fig. 18) nach unten versetzt sind, so dass sich eine erhebliche Magnetkraft $F_z$ ergibt, die nach unten wirkt und beim Start durch die Kraft der Tauchspule 64 überwunden werden muss, damit der Lüfter 100 vor dem Einschalten seiner Drehung in den Zustand des Schwebens gelangen kann. Diese Versetzung sollte nach Möglichkeit kleiner als a/2 sein, da sonst die Kraft $F_{z0}$ sehr groß wird und beim Start ein großer Strom i in der Tauchspule 64 erforderlich ist, um die Summe der Kräfte ($F_w + F_{z0}$) zu überwinden.

**Startvorgang**

Ausgangspunkt ist der ausgeschaltete stromlose Zustand, bei dem der Rotor 22 still steht. Die Radiallager 16, 18 erzeugen zusammen eine Axialkraft Fz0 (Fig. 21), welche die Welle 34 gegen einen mechanischen Anschlag drückt, z.B. den Anschlag 72, wie in Fig. 21 dargestellt. Die Radiallager 16, 18 bewirken eine berührungslose radiale Zentrierung der Welle 34, haben aber noch nicht ihre Betriebsstellung. In Fig. 21, erkennt man das daran, dass die Kraft Fz0 in die falsche Richtung wirkt.

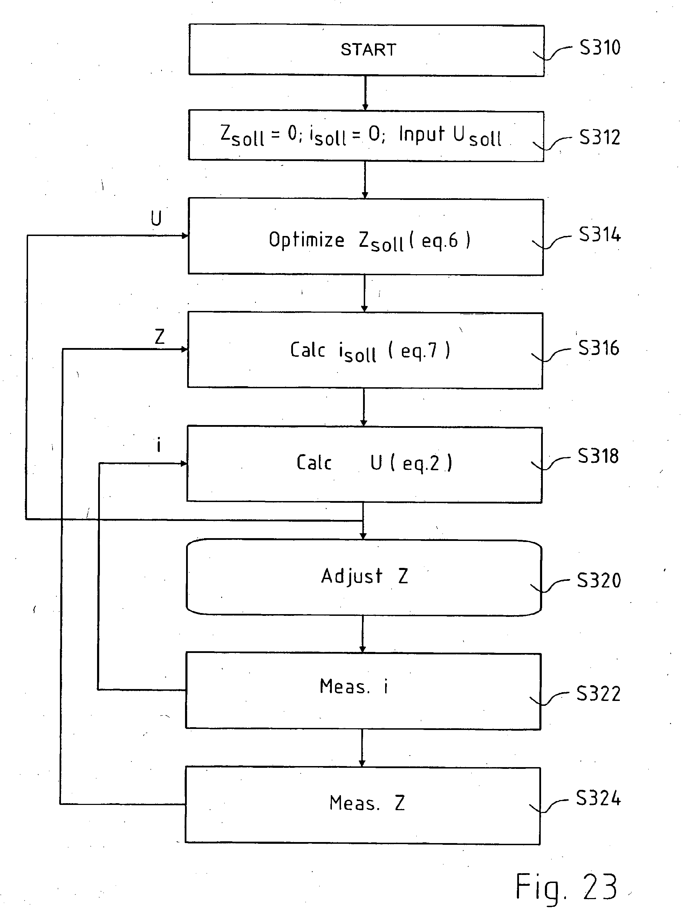

Mit dem Anlegen einer Versorgungsspannung an den Lüfter 100 beginnt die digitale Signalelektronik DSP 76 mit der Abarbeitung einer Startroutine S31 0, die in **Fig. 23** dargestellt ist. Diese veranlasst zunächst, dass in S312 die Werte Zsoll und isoll auf Null gesetzt werden und dass der Spannungs-Sollwert Usoll abgefragt wird, der bevorzugt 0 V beträgt. Gemäß Gleichung (6) beginnt in S314 der schrittweise (iterative) Prozess der Optimierung von $Z_{soll}$. In S316 wird gemäß Gleichung (7) ein erster Wert $i_{soll}$ berechnet, und in S318 wird gemäß Gleichung (2) ein Wert U berechnet, also die Spannung, die an die Tauchspule 64 angelegt werden soll.

In S320 wird durch Anlegen dieser Spannung U an die Tauchspule 64 eine axiale Stellung Z eingestellt. In S322 wird der Strom i in der Tauchspule 64 gemessen, und der Messwert wird zum Schritt S318 zurückgeführt. Im Schritt S324 wird der aktuelle Wert Z für die axiale Position mittels des Sensors 33 gemessen.

Der berechnete Wert U wird zum Schritt S314 zurückgeführt und dient dort gemäß Gleichung (6) zur Berechnung eines neuen Wertes für $Z_{soll}$. Der gemessene Wert Z wird zum Schritt S316 zurückgeführt und dient dort zum Berechnen eines neuen Wertes für isoll. Der gemessene Strom i wird zum Schritt S318 zurückgeführt und dient dort zur Berechnung einer neuen Spannung U.

Auf diese Weise werden der Strom i und damit die Position Z so lange verändert, bis sich die axialen Kräfte im Gleichgewicht befinden.

Anschließend wird der Lüfter 100 eingeschaltet, d.h. das Lüfterrad 25 wird mit dem Motor 52 angetrieben, wobei die Regelanordnung 198 notwendige Korrekturen von Z automatisch vornimmt, wenn sich durch den Betrieb des Lüfters die axialen Kräfte ändern. Der Rotor 22 berührt also jetzt den Stator 50 nicht mehr, und die Lagerung des Gesamtsystems erfolgt berührungsfrei durch magnetische Kräfte. Durch das aktive Axiallager 57, 64 und die passiven Radiallager 16, 18 wird das Lüfterrad 25 in dieser schwebenden Position gehalten. Die Magnetringe von erstem und zweitem Axiallager 16 bzw. 18 befinden sich hierbei jeweils in enger Nähe einer zugeordneten Fluchtungsebene, wie das die Fig. 3 und 6 besonders gut zeigen. In Fig. 6 ist der Abstand von der zugeordneten Fluchtungsebene mit Z bezeichnet.

**Betrieb**

Ab dem Zeitpunkt der Aktivierung des aktiven Axiallagers wird im Schritt S324 (Fig. 22) der Abstand Z zwischen Stator 50 und Rotor 22 in engen zeitlichen Abständen gemessen, z. B. alle 100 μs. Gemäß dem beschriebenen Verfahren (Positionsnachführung 210, Positionsregler 216 und Stromregler 202 in Fig. 20) wird die an die Tauchspule 64 anzulegende Spannung U berechnet. Der Wert für diese Spannung U wird einer Leistungselektronik übermittelt, welche den Strom bereitstellt, der für die Tauchspule 64 benötigt wird. Alternativ wird, falls diese Leistungselektronik selbst eine Stromregelung enthält, der Leistungselektronik direkt ein Wert für einen augenblicklich erforderlichen Sollstrom $i_{soll}$ übermittelt. Die Steuerung des Stromes i kann mit getakteten Transistoren erfolgen, also mit Transistoren, die alternierend vollständig aus- und vollständig eingeschaltet werden, vgl. Fig. 10, oder z. B. mit einem analogen Verstärker. Sie ist jedoch nicht an die vorher genannten Prinzipien gebunden, so dass weitere Abwandlungen und Modifikationen möglich sind.

Im Betrieb können in axialer Richtung verschiedene Kräfte auftreten: Permanentmagnetische Kräfte; dynamische Axialkräfte (aufgrund der Massenträgheit); Gewichtskräfte bei vertikaler Rotorachse; elektromagnetische Kräfte; evtl. Strömungskräfte; andere Störkräfte. Die stationären Kräfte werden durch eine entsprechende Änderung der Kraft $F_z$ kompensiert, indem die Größe Z durch das aktiv regelbare magnetische Axiallager (Tauchspule 64) verändert wird, vgl. Fig. 18.

In radialer Richtung können ebenfalls unterschiedliche Kräfte auftreten:

Statische und dynamische Unwuchtkräfte; dynamische Radialkräfte aufgrund der Massenträgheit und von Kreiseleffekten; Radialkräfte des Antriebs; Gewichtskräfte bei horizontaler Rotorachse; andere Störkräfte.

Diese Kräfte werden durch die passiven Radiallager 16, 18 aufgenommen. Auch ein zu starkes Kippen des Lüfterrads 25 wird durch die Radiallager 16, 18 verhindert. Bei sehr hohen Störkräften übernehmen Fanglager (Notlauflager) zeitweilig die radiale und axiale Führung des Rotors 22.

Im Betrieb wird fortlaufend der Zustand des Systems überprüft. Dazu zählt die Überwachung des aktiven Magnetlagers, des Antriebs und der Elektronik, so dass sich der Wert Z adaptiv den jeweiligen Betriebsbedingungen anpasst.

Ein Beispiel ist die Überwachung der Temperatur der Tauchspule 64, um diese vor Überhitzung zu schützen. Eine mögliche Ausführung ist die Schätzung der aktuellen Spulentemperatur mit Hilfe eines thermischen Modells, das sich in der Signalelektronik befindet. Solche thermischen Modelle sind von Motorschutzschaltern bekannt und werden deshalb nicht weiter beschrieben.

Bei der Erfindung hat also ein Lüfter 100 einen elektronisch kommutierten Antriebsmotor 52 zum Antrieb von Lüfterflügeln 26. Dieser Antriebsmotor 52 hat einen mit einem Lagerrohr 54 verbundenen Stator 50 und einen mit einer Welle 34 versehenen Rotor 22. Die Welle 34 ist in dem Lagerrohr 54 mittels passiver radialer Magnetlager 16, 18 radial berührungslos gelagert. Sie ist relativ zum Lagerrohr 54 axial verschiebbar und steht mit einem Rotormagneten 44 in Antriebsverbindung, welcher einen ersten magnetischen Rückschluss 46 aufweist. Auch ist ein mit der Welle 34 verbundener zweiter magnetischer Rückschluss 27 vorgesehen, der etwa glockenförmig ausgebildet ist und bei dem die Innenseite 59 des äußeren Randes 28 eine äußere Begrenzung für einen im Wesentlichen zylindrischen Luftspalt 57 bildet, in welchem im Betrieb ein radialer Magnetfluss 55' in einer vorgegebenen Richtung verläuft. Ferner ist eine Tauchspule 64 vorgesehen, welche in den zylindrischen Luftspalt 57 eintaucht und mit dem Lagerrohr 54 mechanisch verbunden ist, so dass sich bei einer axialen Verschiebung der Tauchspule 64 relativ zum zylindrischen Luftspalt 57 die Lage der Welle 34 relativ zum Lagerrohr 54 ändert. Das erlaubt es, die magnetische Lagerung praktisch leistungslos in einen Schwebezustand zu bringen, also in einen Zustand der Levitation.

Naturgemäß sind im Rahmen der vorliegenden Erfindung vielfache Abwandlungen und Modifikationen möglich. So können im Rahmen der Erfindung auch andere Motortypen verwendet werden, z.B. Innen- oder Außenläufermotoren, und besonders solche Motoren, die bei einem Versatz des Rotors aus dem Zentrum der Statorbohrung keine oder nur geringe Radialkräfte erzeugen. Auch kann der magnetische Fluss 55', 55", 55''' im zylindrischen Luftspalt 57, 57", 57''' durch verschiedenartige Anordnungen von Dauermagneten erzeugt werden, wobei die dargestellten Beispiele nicht erschöpfend sind.

**Patentansprüche**

1. Lüfter mit einem elektronisch kommutierten Antriebsmotor (52) zum Antrieb von Lüfterflügeln (26), welcher Antriebsmotor (52) einen Stator (50) und einen mit einer Welle (34) versehenen Rotor (22) aufweist, welche Welle (34) am Stator (50) mittels Dauermagneten (38, 56; 40, 58) berührungslos radial gelagert und relativ zum Stator (50) axial verschiebbar ist, und mit dem Rotor (22) in Antriebsverbindung steht, welcher Rotor (22) seinerseits mit einem Lüfterrad (25) in Antriebsverbindung steht, in welchem ein zylindrischer Luftspalt (57, 57", 57''') ausgebildet ist, in welchem im Betrieb ein im Wesentlichen radialer Magnetfluss (55', 55", 55''') in einer vorgegebenen Richtung verläuft, ferner mit einer Tauchspule (64), welche in den zylindrischen Luftspalt (57, 57", 57''') eintaucht und mit dem Stator (50) mechanisch verbunden ist, so dass sich bei einer axialen Verschiebung der Welle (34) relativ zum Stator (50) die Lage der Tauchspule (64) relativ zum zylindrischen Luftspalt (57, 57", 57''') ändert.

2. Lüfter nach Anspruch 1, bei welchem zur quantitativen Erfassung der relativen Lage (Z) des Stators (50) relativ zur Welle (34) ein berührungsloser Lagesensor (33) vorgesehen ist.

3. Lüfter nach Anspruch 2, bei welchem der Lagesensor als Wirbelstromsensor (33) ausgebildet ist, welcher bevorzugt eine Sensorspule (66) aufweist, der im Betrieb ein hochfrequentes Signal (230) zugeführt wird, und der ein elektrisch gut leitendes Teil (31) zugeordnet ist, dessen Abstand (d) von der Sensorspule (66) eine Funktion der Lage der Welle (34) relativ zum Stator (50) ist.

4. Lüfter nach einem der vorhergehenden Ansprüche, bei welchem zur Erzeugung des magnetischen Flusses (55', 55", 55''') im zylindrischen Luftspalt (57, 57", 57''') ein axial magnetisierter Permanentmagnet (48) vorgesehen ist, dem ein Flussleitstück (46) zugeordnet ist, welches einen etwa kreiszylindrisch ausgebildeten Außenumfang (47) aufweist, der eine radial innere Begrenzung des zylindrischen Luftspalts (57) bildet.

5. Lüfter nach einem der vorhergehenden Ansprüche, bei welchem ein im Rotor (22) angeordnetes weichferromagnetisches Teil (46) sowohl als Rückschlussteil für den axial magnetisierten Permanentmagneten (48) wie als erster magnetischer Rückschluss für den Rotormagneten (44) des elektronisch kommutierten Motors (52) ausgebildet ist.

6. Lüfter nach einem der vorhergehenden Ansprüche, bei welchem der Antriebsmotor (52) einen Rotormagneten (44) aufweist,
und dieser Rotormagnet (44), das weichferromagnetische Teil (46), und der für die Erzeugung des Flusses (55', 55", 55''') im Luftspalt (57, 57", 57''') dienende Permanentmagnet (48) sandwichartig angeordnet sind.

7. Lüfter nach einem der vorhergehenden Ansprüche, bei welchem der elektronisch kommutierte Antriebsmotor (52) einen flachen Luftspalt (101) aufweist, in welchem eine sogenannte eisenlose Statorwicklung (102) angeordnet ist.

8. Lüfter nach einem der vorhergehenden Ansprüche, bei welchem ein Lageregler (Fig. 20: 216) zur automatischen Regelung der Lage der Welle (34) relativ zum Stator (50) vorgesehen ist.

9. Lüfter nach Anspruch 8, bei welchem zur Regelung der Lage der Welle (34) relativ zum Stator (50) ein Stromregler (202) für den Strom in der Tauchspule (64) vorgesehen ist, welchem abhängig vom Unterschied zwischen der tatsächlichen Lage (Z) und der gewünschten Lage (Zsoll) der Welle (34) ein Sollstrom (isoll) vorgegeben wird.

10. Lüfter nach Anspruch 9, bei welchem bei einer Übereinstimmung der tatsächlichen Lage (Z) der Tauchspule (64) und der gewünschten Lage (Zsoll) der Tauchspule (64) der Sollstrom (isoll) im zeitlichen Mittel etwa den Wert Null hat, und zur Ermittlung der gewünschten Lage (Zsoll) der Tauchspule (64) bevorzugt ein überlagerter Regelkreis (210) vorgesehen ist, um eine Kompensation stationärer axialer Kräfte zu ermöglichen. (outer loop controller)

11. Lüfter nach Anspruch 10, bei welchem die Regelanordnung so ausgebildet ist, dass sie im Betrieb abhängig vom Unterschied (idev) zwischen dem Sollstrom (isoll) und dem tatsächlichen Wert (i) des Stromes in der Tauchspule (64) eine Spannung (U) berechnet und mit einer vorgegebenen Sollspannung (Usoll) vergleicht, die Differenz dieser Spannungen summiert, und abhängig von der augenblicklichen Größe dieser Summe eine gewünschte Lage (Zsoll) für den Lageregler (216) berechnet.

12. Lüfter nach einem der Ansprüche 8 bis 11, bei welchem der Regler einen digitalen Signalprozessor (76) aufweist, welcher bevorzugt auch zur Steuerung der Kommutierung des elektronisch kommutierten Motors (52) dient.

13. Lüfter nach einem der vorhergehenden Ansprüche, bei welchem eine passive Lageranordnung (16, 18) mit Permanentmagneten vorgesehen ist, welche dazu ausgebildet ist, den Rotor (22) bei stromloser Tauchspule (64) in eine gewünschte Sollposition (Fig. 21) zu bewegen.

14. Lüfter nach Anspruch 13, bei welchem an der Welle (34) zwei passive magnetische Radiallager (16, 18) vorgesehen sind, von denen jedes als Stapellager mit einer Mehrzahl von axial magnetisierten Ringen ausgebildet ist.

15. Lüfter nach einem der vorhergehenden Ansprüche, bei welchem die Welle (34) mit mindestens einem mechanischen Fanglager (72) versehen ist, welches bevorzugt als Axiallager ausgebildet und am freien Ende (35) der Welle (34) vorgesehen ist.

16. Lüfter, welcher aufweist:

    Einen Rotor (22);
    einen Stator (50);
    mindestens ein passives radiales Magnetlager;
    mindestens ein aktiv regelbares axiales Magnetlagersystem;
    eine erste magnetische Lageranordnung (38), welche am Rotor (22) des Lüfters (100) angeordnet ist und zwei Magnetringe (38, 40) aufweist, die im Abstand voneinander angeordnet sind;
    eine zweite magnetische Lageranordnung, die am Stator (50) des Lüfters (100) angeordnet ist und mindestens zwei Magnetringe (56, 58) aufweist, die im Abstand voneinander angeordnet sind;
    eine innerhalb des Lüfters (100) angeordnete elektromagnetische Anordnung (57, 64) zur Regelung der axialen Position (Z) des Rotors (22) relativ zum Stator (50);
    ein zwischen den beiden im Abstand voneinander angeordneten Magnetringen (38, 40) der ersten magnetischen Lageranordnung (38) vorgesehenes Distanzglied (42);
    und ein zwischen den beiden im Abstand voneinander angeordneten Magnetringen (56, 58) der zweiten magnetischen Lageranordnung vorgesehenes Distanzglied (60);
    welche Distanzglieder (42, 60) jeweils eine vorgegebene Länge haben und entweder nicht ferromagnetisch oder weichferromagnetisch ausgebildet ist.

17. Lüfter nach einem der vorhergehenden Ansprüche, bei welchem ein passives Radiallagersystem vorgesehen ist, bei dem die Kompensation der inneren und äußeren Kräfte mindestens teilweise durch die axialen Kräfte des passiven Radiallagersystems erfolgt, deren Größe durch eine entsprechende Verschiebung des Rotors (22) relativ zum Stator (50) regelbar ist.

18. Lüfter nach einem der vorhergehenden Ansprüche, bei welchem eine Vorrichtung zur zeitweiligen Änderung der relativen Stellung von Rotor (22) und Stator (50) vorgesehen ist, um die radiale Steifigkeit (Sr) der permanentmagnetischen passiven Radiallagerung (16, 18) und damit die Resonanzfrequenz des Lüfters (100) beim Hochlauf bzw. beim Durchlaufen eines kritischen Drehzahlbereichs zu ändern.

19. Lüfter nach einem der vorhergehenden Ansprüche, bei welchem zur Lageregelung der elektromagnetischen Anordnung (57, 64) eine Regelanordnung mit einer Positionsnachführung (219), einem Positionsregler (216), und einem Stromregler (202) vorgesehen ist.

**Claims**

1. Fan having an electronically commutated driving motor (52) for driving fan blades (26), which driving motor (52) has a stator (50) and a rotor (22) provided with a shaft (34), which shaft (34) is mounted radially on the stator (50) in a contact-less manner by means of permanent magnets (38, 56; 40, 58), is axially displaceable relative to said stator (50) and is in driving connection with the rotor (22), which rotor (22) is, in turn, in driving connection with a fan wheel (25) in which there is formed a cylindrical air gap (57, 57'', 57''') in which a substantially radial magnetic flux (55', 55'', 55''') runs in a preset direction in the course of operation;
said fan also having a plunger coil (64) which plunges into the cylindrical air gap (57, 57'', 57''') and is mechanically connected to the stator (50), so that the location of the plunger coil (64) relative to the cylindrical air gap (57, 57'', 57''') changes when an axial displacement of the shaft (34) occurs relative to the stator (50).

2. Fan according to Claim 1, in which a contact-less location sensor (33) is provided for quantitatively detecting the relative location (Z) of the stator (50) relative to the shaft (34).

3. Fan according to Claim 2, in which the location sensor is designed as an eddy-current sensor (33) which preferably has a sensor coil (66) to which a highfrequency signal (230) is fed in the course of operation and with which there is associated an electrically highly conductive part (31), the distance (d) of which from the sensor coil (66) is a function of the location of the shaft (34) relative to the stator (50).

4. Fan according to one of the preceding claims, in which there is provided, for the purpose of generating the magnetic flux (55', 55'', 55''') within the cylindrical air gap (57, 57'', 57'''), an axially magnetised permanent magnet (48) with which there is associated a flux-conducting piece (46) which has an outer periphery (47) of approximately circular-cylindrical design, which constitutes a radially inner boundary of the cylindrical air gap (57).

5. Fan according to one of the preceding claims, in which a soft-ferromagnetic part (46) arranged within the rotor (22) is designed both as a short-circuit part for the axially magnetised permanent magnet (48) and as a first magnetic short circuit for the rotor magnet (44) of the electronically commutated motor (52).

6. Fan according to one of the preceding claims, in which the driving motor (52) has a rotor magnet (44), and the said rotor magnet (44), the soft-ferromagnetic part (46) and the permanent magnet (48) which serves for generating the flux (55', 55'', 55''') within the air gap (57, 57'', 57''') are arranged in a sandwich-like manner.

7. Fan according to one of the preceding claims, in which the electronically commutated driving motor (52) has a shallow air gap (101) within which a so-called "ironless" stator winding (102) is arranged.

8. Fan according to one of the preceding claims, in which a location-controller (Fig. 20: 216) is provided for automatically controlling the location of the shaft (34) relative to the stator (50).

9. Fan according to Claim 8, in which there is provided, for the purpose of controlling the location of the shaft (34) relative to the stator (50), a current-controller (202) for the current in the plunger coil (64), for which current-controller a target current ($i_{soll}$) is preset in dependence upon the difference between the actual location (Z) and the desired location ($Z_{soll}$) of the shaft (34).

10. Fan according to Claim 9, in which, when the actual location (Z) of the plunger coil (64) and the desired location ($Z_{soll}$) of said plunger coil (64) coincide, the target current ($i_{soll}$) has approximately the value zero on average over time, and for the purpose of detecting the desired location ($Z_{soll}$) of the plunger coil (64), a superimposed control circuit (outer loop controller) (210) is preferably provided in order to make it possible to compensate for stationary axial forces.

11. Fan according to Claim 10, in which the control arrangement is designed in such a way that, in the course of operation, it calculates a voltage (U) in dependence upon the difference ($i_{dev}$) between the target current ($i_{soll}$) and the actual value ($i$) of the current within the plunger coil (64) and compares it with a preset target voltage ($U_{soll}$), adds up the difference of these voltages, and calculates a desired location ($Z_{soll}$) for the location-controller (216) in dependence upon the momentary magnitude of this sum.

12. Fan according to one of Claims 8 to 11, in which the controller has a digital signal-processor (76) which preferably also serves for controlling the commutation of the electronically commutated motor (52).

**13.** Fan according to one of the preceding claims, in which there is provided a passive bearing arrangement (16, 18) having permanent magnets, which is designed for the purpose of plunging the rotor (22) into a desired target position (Fig. 21) when the plunger coil (64) is devoid of current.

**14.** Fan according to Claim 13, in which there are provided, on the shaft (34), two passive magnetic radial bearings (16, 18), each of which is designed as a stack-type bearing with a plurality of axially magnetised rings.

**15.** Fan according to one of the preceding claims, in which the shaft (34) is provided with at least one mechanical catch bearing (72) which is preferably designed as an axial bearing and is provided at the free end (35) of the shaft (34).

**16.** Fan which has:

a rotor (22);
a stator (50);
at least one passive radial magnetic bearing;
at least one actively controllable axial magnetic bearing system;
a first magnetic bearing arrangement (38) which is arranged on the rotor (22) of the fan (100) and has two magnetic rings (38, 40) which are arranged at a distance from one another;
a second magnetic bearing arrangement which is arranged on the stator (50) of the fan (100) and has at least two magnetic rings (56, 58) which are arranged at a distance from one another;
an electromagnetic arrangement (57, 64), which is arranged inside the fan (100), for controlling the axial position (Z) of the rotor (22) relative to the stator (50);
a spacer member (42) which is provided between the two magnetic rings (38, 40), which are arranged at a distance from one another, of the first magnetic bearing arrangement (38);
and a spacer member (60) which is provided between the two magnetic rings (56, 58), which are arranged at a distance from one another, of the second magnetic bearing arrangement;
which spacer members (42, 60) each have a preset length and are of either non-ferromagnetic or soft-ferromagnetic design.

**17.** Fan according to one of the preceding claims, in which a passive radial bearing system is provided, in which the internal and external forces are compensated for, at least partially, by the axial forces of said passive radial bearing system, the magnitude of which axial forces can be controlled by suitable displacement of the rotor (22) relative to the stator (50).

**18.** Fan according to one of the preceding claims, in which a device for intermittently changing the relative position of the rotor (22) and stator (50) is provided, in order to change the radial stiffness (Sr) of the permanently magnetic passive radial bearing (16, 18), and thereby the resonance frequency of the fan (100), when running-up or when passing through a critical rotational speed range.

**19.** Fan according to one of the preceding claims, in which a control arrangement having a position-tracking system (219), a position-controller (216) and a current-controller (202) is provided for the purpose of controlling the location of the electromagnetic arrangement (57, 64).

## Revendications

**1.** Ventilateur, avec un moteur d'entraînement (52) à commutation électronique pour entraîner des ailettes de ventilateur (26), ce moteur d'entraînement (52) présentant un stator (50) et un rotor (22) pourvu d'un arbre (34), cet arbre (34) étant monté radialement sans contact sur le stator (50) au moyen d'aimants permanents (38, 56 ; 40, 58) et étant axialement mobile par rapport au stator (50), et se trouvant en liaison d'entraînement avec le rotor (22), ce rotor (22) se trouvant lui-même en liaison d'entraînement avec une roue de ventilateur (25) dans laquelle est formé un entrefer cylindrique (57, 57", 57"') dans lequel, en fonctionnement, un flux magnétique (55', 55", 55") essentiellement radial s'étend dans une direction prédéfinie,
avec en outre une bobine mobile (64) qui s'enfonce dans l'entrefer cylindrique (57, 57", 57"') et est mécaniquement reliée au stator (50), de sorte que la position de la bobine mobile (64) par rapport à l'entrefer cylindrique (57, 57", 57"') se modifie lors d'un déplacement axial de l'arbre (34) par rapport au stator (50).

**2.** Ventilateur selon la revendication 1, dans lequel un capteur de position (33) sans contact est prévu pour la détection quantitative de la position relative (Z) du stator (50) par rapport à l'arbre (34).

3. Ventilateur selon la revendication 2, dans lequel le capteur de position est réalisé sous forme de capteur (33) à courants de Foucault, qui présente de préférence une bobine de capteur (66) à laquelle est apporté en fonctionnement un signal (230) à haute fréquence et à laquelle est associé un élément (31) électriquement bon conducteur, dont la distance (d) par rapport à la bobine de capteur (66) est fonction de la position de l'arbre (34) par rapport au stator (50).

4. Ventilateur selon l'une des revendications précédentes, dans lequel un aimant permanent (48) axialement magnétisé est prévu dans l'entrefer cylindrique (57, 57", 57''') pour produire le flux magnétique (55', 55", 55'''), aimant auquel est associée une pièce conductrice de flux (46) qui présente une périphérie extérieure (47) réalisée approximativement cylindrique circulaire, qui forme une délimitation radialement intérieure de l'entrefer cylindrique (57).

5. Ventilateur selon l'une des revendications précédentes, dans lequel un élément ferromagnétique doux (46) disposé dans le rotor (22) est conçu à la fois comme élément de dérivation magnétique pour l'aimant permanent (48) axialement magnétisé et comme première dérivation magnétique pour l'aimant de rotor (44) du moteur (52) à commutation électronique.

6. Ventilateur selon l'une des revendications précédentes, dans lequel le moteur d'entraînement (52) présente un aimant de rotor (44),
et cet aimant de rotor (44), l'élément ferromagnétique doux (46) et l'aimant permanent (48) servant à produire le flux (55', 55", 55''') dans l'entrefer (57, 57", 57''') sont disposées à la manière d'une structure sandwich.

7. Ventilateur selon l'une des revendications précédentes, dans lequel le moteur d'entraînement (52) à commutation électronique présente un entrefer plat (101) dans lequel est disposé un bobinage de stator (102) dit sans fer.

8. Ventilateur selon l'une des revendications précédentes, dans lequel un régulateur de position (Fig. 20 : 216) est prévu pour la régulation automatique de la position de l'arbre (34) par rapport au stator (50).

9. Ventilateur selon la revendication 8, dans lequel un régulateur de courant (202) pour le courant dans la bobine mobile (64) est prévu pour la régulation de la position de l'arbre (34) par rapport au stator (50), régulateur auquel est alloué un courant de consigne ($i_{soll}$) en fonction de la différence entre la position effective (Z) et la position souhaitée ($Z_{soll}$) de l'arbre (34).

10. Ventilateur selon la revendication 9, dans lequel le courant de consigne ($i_{soll}$) a approximativement la valeur zéro en moyenne dans le temps en cas de coïncidence entre la position effective (Z) de la bobine mobile (64) et la position souhaitée ($Z_{soll}$) de la bobine mobile (64), et un circuit de régulation prioritaire (210) est de préférence prévu pour déterminé la position souhaitée ($Z_{soll}$) de la bobine mobile (64), afin de permettre une compensation des forces axiales stationnaires (outer loop controller).

11. Ventilateur selon la revendication 10, dans lequel l'ensemble de régulation est conçu de telle sorte qu'en fonctionnement, il calcule une tension (U) en fonction de la différence ($i_{dev}$) entre le courant de consigne ($i_{soll}$) et la valeur effective (i) du courant dans la bobine mobile (64) et la compare à une tension de consigne prédéfinie ($U_{soll}$), forme la différence de ces tensions et calcule une position souhaitée ($Z_{soll}$) pour le régulateur de position (216) en fonction de la valeur momentanée de cette différence.

12. Ventilateur selon l'une des revendications 8 à 11, dans lequel le régulateur présente un processeur numérique de signaux (76) qui sert de préférence également à commander la commutation du moteur (52) à commutation électronique.

13. Ventilateur selon l'une des revendications précédentes, dans lequel il est prévu un ensemble de palier passif (16, 18) à aimants permanents, qui est conçu pour déplacer le rotor (22) dans une position de consigne souhaitée (Fig. 21) lorsque la bobine mobile (64) est sans courant.

14. Ventilateur selon la revendication 13, dans lequel deux paliers radiaux magnétiques passifs (16, 18) sont prévus sur l'arbre (34), chacun d'entre eux étant réalisé sous forme de palier empilé avec une pluralité de bagues axialement magnétisées.

**15.** Ventilateur selon l'une des revendications précédentes, dans lequel l'arbre (34) est pourvu d'au moins un palier de contact mécanique (72), qui est de préférence réalisé sous forme de palier axial et est prévu à l'extrémité libre (35) de l'arbre (34).

**16.** Ventilateur, qui présente :

un rotor (22) ;
un stator (50) ;
au moins un palier magnétique radial passif ;
au moins un système de palier magnétique axial à régulation active ;
un premier ensemble de palier magnétique (38), qui est disposé sur le rotor (22) du ventilateur (100) et présente deux bagues magnétiques (38, 40) qui sont disposées à distance entre elles ;
un deuxième ensemble de palier magnétique, qui est disposé sur le stator (50) du ventilateur (100) et présente au moins deux bagues magnétiques (56, 58) qui sont disposées à distance entre elles ;
un ensemble électromagnétique (57, 64) disposé à l'intérieur du ventilateur (100) et destiné à réguler la position axiale (Z) du rotor (22) par rapport au stator (50) ;
un élément d'écartement (42) prévu entre les deux bagues magnétiques (38, 40) disposées à distance entre elles du premier ensemble de palier magnétique (38) ;
et un élément d'écartement (60) prévu entre les deux bagues magnétiques (56, 58) disposées à distance entre elles du deuxième ensemble de palier magnétique ;
ces éléments d'écartement (42, 60) possédant chacun une longueur prédéfinie et étant réalisés soit non ferromagnétiques soit ferromagnétiques doux.

**17.** Ventilateur selon l'une des revendications précédentes, dans lequel il est prévu un système de palier radial passif, selon lequel la compensation des forces intérieures et extérieures s'effectue au moins partiellement par les forces axiales du système de palier radial passif, forces dont l'ampleur peut être régulée par un déplacement correspondant du rotor (22) par rapport au stator (50).

**18.** Ventilateur selon l'une des revendications précédentes, dans lequel un dispositif est prévu pour modifier temporairement la position relative du rotor (22) et du stator (50), afin de modifier la rigidité radiale (Sr) de l'ensemble de palier passif (16, 18) à aimants permanents et donc la fréquence de résonance du ventilateur (100) lors de la montée en régime ou lors du passage d'une plage de vitesse de rotation critique.

**19.** Ventilateur selon l'une des revendications précédentes, dans lequel il est prévu, pour réguler la position de l'ensemble électromagnétique (57, 64), un ensemble de régulation avec une poursuite de position (219), un régulateur de position (216) et un régulateur de courant (202).

EP 2 064 450 B1

Fig. 1

Fig. 2

EP 2 064 450 B1

Fig. 3

EP 2 064 450 B1

Fig. 4

EP 2 064 450 B1

Fig. 5

Fig. 6

$$F_W = -F_Z$$
$$i \approx 0$$

EP 2 064 450 B1

d    34    31    33

22

66

Fig. 7

230    236    238    240

66    234    232    $U_m$

33    76

DSP

ADC    CAP

ADC

Fig. 8

$U_m$

$U_m = f_{(d)}$

d

Fig. 9

25

Fig. 10

Fig. 11

Fig. 12

Fig. 13

Fig. 14

Fig. 15

Fig. 16

A )  $0 < z < + a/2$
$F_Z < 0$
$S_\Gamma < 0$

B )  $z = 0$
$F_Z = 0$
$S_\Gamma = Max$

C )  $0 > z > -a/2$
$F_Z > 0$
$S_\Gamma = Low$

Fig. 17

Fig. 18

Fig. 19

Fig. 20

Fig. 21

Fig. 22

START — S310

$Z_{soll} = 0;\ i_{soll} = 0;\ \text{Input } U_{soll}$ — S312

Optimize $Z_{soll}$ ( eq.6 ) — S314

Calc $i_{soll}$ ( eq.7 ) — S316

Calc $\quad$ U ( eq.2 ) — S318

Adjust Z — S320

Meas. i — S322

Meas. Z — S324

Fig. 23

**Fig.24**

Fig. 25

Fig.26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20304493 U